(19) Europäisches Patentamt
European Patent Office
Office européen des brevets

(11) **EP 4 524 546 A2**

(12) **EUROPEAN PATENT APPLICATION**

(43) Date of publication:
**19.03.2025 Bulletin 2025/12**

(21) Application number: **24209311.0**

(22) Date of filing: **01.11.2019**

(51) International Patent Classification (IPC):
*G01N 11/08* (2006.01)

(52) Cooperative Patent Classification (CPC):
**G01N 11/08; G01N 11/04**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **02.11.2018 US 201862755320 P**

(62) Document number(s) of the earlier application(s) in accordance with Art. 76 EPC:
**19878746.7 / 3 873 668**

(71) Applicant: **Neofluidics, LLC**
**San Diego, California 92121 (US)**

(72) Inventor: **SOLOMON, Deepak**
**San Diego (US)**

(74) Representative: **Cooley (UK) LLP**
**22 Bishopsgate**
**London EC2N 4BQ (GB)**

Remarks:
•This application was filed on 28-10-2024 as a divisional application to the application mentioned under INID code 62.
•Claims filed after the date of filing of the application / after the date of receipt of the divisional application (Rule 68(4) EPC).

(54) **MICROFLUIDIC VISCOMETER ASSEMBLY AND METHOD USING THE SAME**

(57)    Provided herein are microfluidic viscometer assemblies and methods using the same, that include a microfluidic cartridge having microfluidic circuits that have channels adapted for viscosity determination without the need of a control fluid or oil. The viscometer assemblies also include an image recording system and a pressure control unit. In some embodiments, a temperature control unit is included as well. During methods using the viscometers provided herein, microfluidic cartridges can be loaded and removed from a viscometer, and disposed of.

FIG. 1

**EP 4 524 546 A2**

## Description

### Related Applications

This application claims the benefit of U.S. Ser. No. 62/755,320 filed on November 2, 2018, which is incorporated by reference in its entirety.

### Field of the Disclosure

This disclosure relates generally to the field of viscometers and, more particularly, to viscometers for high throughput analysis of fluids.

### Background of the Disclosure

The importance of viscosity measurements spans many applications including but not limited to consumer products, pharmaceuticals, inks, biological samples, and lubricants. Understanding how these substances resist motion under an applied force enables users to predict how that substance will perform for any given application. Many macroscale rheometers on the market provide the necessary viscosity measurements for common applications. However, these macroscale rheometers tend to be low throughput, high volume, and costly for the user (e.g,. these are bulky and require skilled operators). In addition, currently available viscometers require a large sample volume, cumbersome cleaning procedures, are useful for only a limited shear-rate range, are not suitable for complex fluids, and are known to be associated with problems such as viscoelastic skin formation, bubble formation, and evaporation. Pressure sensor-based viscometers are known not to exhibit sufficient durability.

The microfluidic viscometers disclosed herein solve many of these problems. For instance, the microfluidic viscometers disclosed herein have a broad dynamic viscosity range (i.e., 0.1 to 50,000 cP) and shear rate range (e.g., 1-500,000 1/s); provide true multiplex capability (e.g., up to 30 samples may be analyzed simultaneously); small sample volume required (e.g., 5-25 ul); provide highly accurate and reliable data (e.g., 2-5% of reading); highly reproducible readings (e.g., within 1%); provide for wide temperature control (e.g., 4-80°C); applicable to Newtonian and Non-Newtonian fluids; include disposable cartridges; and include easy-to-use software (e.g., on-board parameter control and data analysis). These and other advantages over currently available rheometers and viscometers will be evident from the disclosure below.

### Brief Description of the Drawings

**Figure 1.** Illustrative embodiment of a microfluidic viscometer assembly.

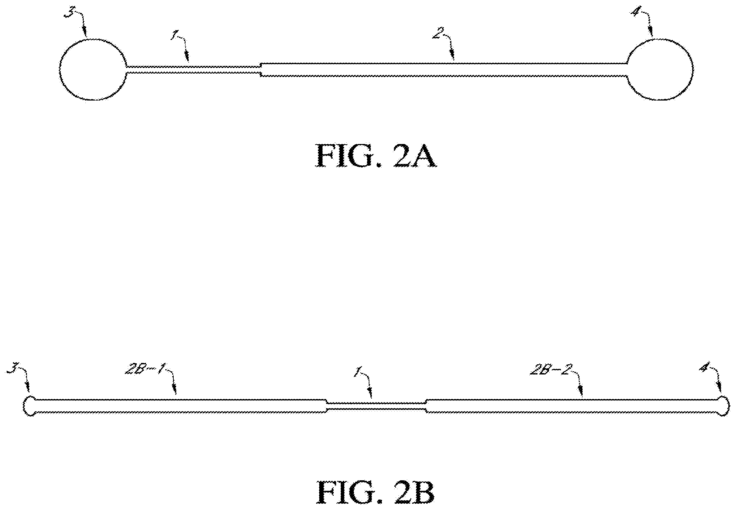

**Figures 2A and 2B.** FIG. 2A illustrates an exemplary microfluidic circuit including an inlet (**3**), a microfluidic channel including a first channel section (**1**) (e.g., first channel section having a first diameter, also referred to herein as a small channel section) and a section channel section (**2**) (e.g., second channel section having a second diameter greater than the first diameter, also referred to as a large channel section), and an outlet (**4**). FIG. 2B illustrates an exemplary microfluidic circuit including an inlet (**3**); a microfluidic channel including a first large channel section (**2B-1**), a first channel section (**1**) (e.g., first channel section having a first diameter), and a second large channel section (**2B-2**); and an outlet (**4**); wherein the diameter of the first (**2B-1**) and second (**2B-2**) large channel sections are each greater than the first diameter (i.e. the diameter of the first channel section (**1**)).

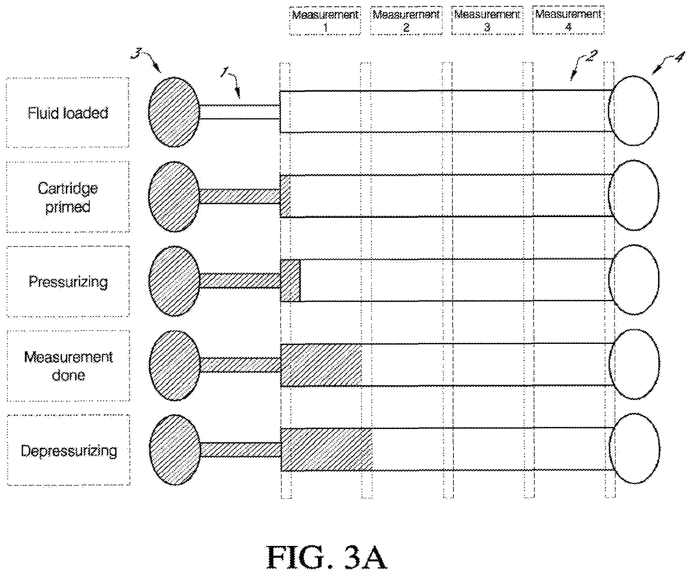

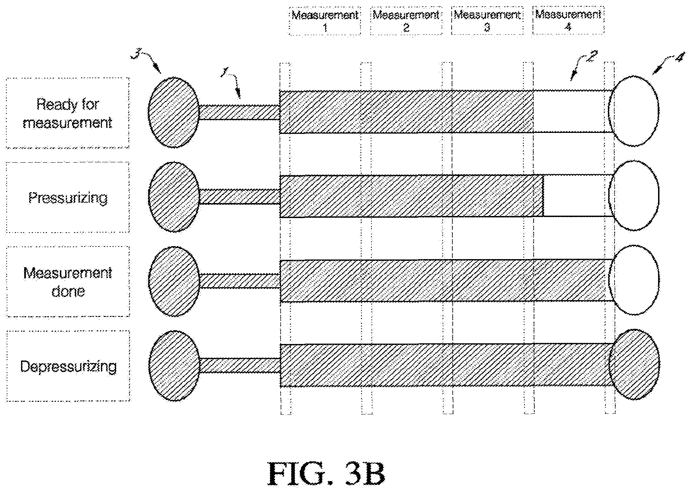

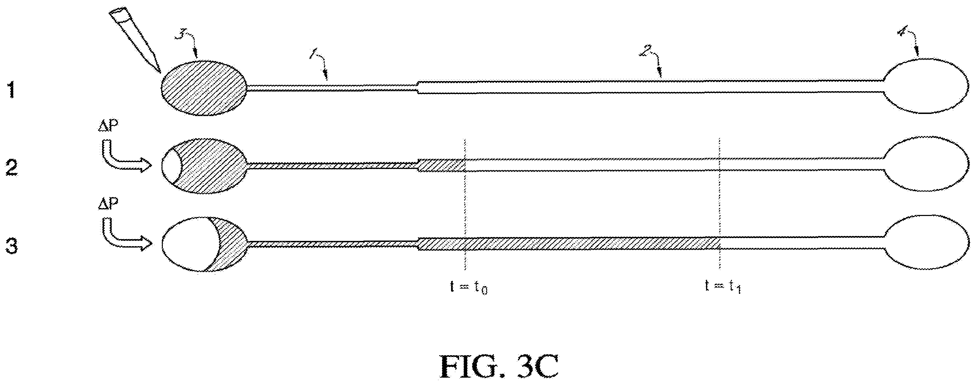

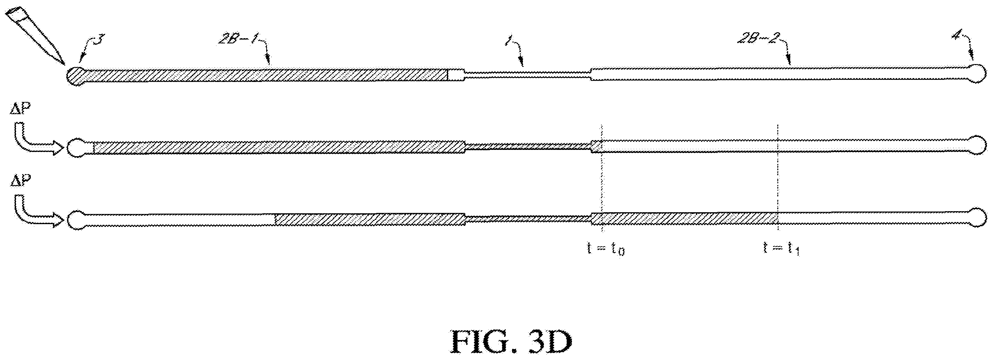

**Figures 3A-3D.** FIGS. **3A and 3B** illustrate channel gates for velocity measurement using a microfluidic circuit comprising an inlet (**3**), a microfluidic channel having a first channel section (**1**) (e.g., first channel section having a first diameter) and a second channel section (**2**) (e.g., second channel section having a second diameter greater than the first diameter), and an outlet (**4**). FIG. **3C** illustrates an exemplary flow of fluid through a microfluidic circuit including an inlet (**3**), a microfluidic channel having a first channel section (**1**) (e.g., first channel section having a first diameter) and a second channel section (**2**) (e.g., second channel section having a second diameter greater than the first diameter), and an outlet (**4**). FIG. **3D** illustrates an exemplary flow of fluid through a microfluidic circuit comprising an inlet (**3**), a microfluidic channel including a first large channel section (**2B-1**), a first channel section (**1**) (e.g., first channel section having a first diameter), and a second large channel section (**2B-2**); and an outlet (**4**), wherein the diameter of the first and second large channel sections (**2B-1** and **2B-2**) are each greater than the first diameter (i.e. the diameter of the first channel section (**1**).

**Figure 4.** Exemplary microfluidic cartridge (**5**) ("Cartridge 1") comprising multiple microfluidic circuits (10), each including an inlet (**3**), a microfluidic channel including a small higher-resistance first channel section (**1**) (e.g., first channel section having a first diameter) and a large second lower resistance channel section (**3**) (e.g., second channel section having a second diameter greater than the first diameter), and an outlet (**4**).

**Figure 5.** Exemplary microfluidic viscometer comprising an image recording and processing system (**6**) positioned above a cartridge (**5**) comprising multiple microfluidic circuits, a pressure control unit (**7**), and a temperature control unit (**8**).

**Figure 6.** Exemplary microfluidic viscometer assembly comprising an image recording and processing system (in this embodiment comprising a camera and lens (**6-1**), image processor (**6-2**), lens (**6-3**), mirror (**6-4**), and light source (**6-5**)) positioned above a cartridge (**5**) comprising multiple microfluidic circuits, a pressure control unit (**7**) and associated manifold (**7-1**), and a temperature control unit (**8**) including associated heat spreader plate (**8-1**), the microfluidic viscometer being encased within an external shell (**9**).

**Figures 7A-7B.** Exemplary image recording system (in this embodiment including a camera (**6-1**), a light source (**6-5**), and a diffuser (**6-6**)) optically connected to a microfluidic cartridge (**5**) in an exemplary microfluidic viscometer.

**Figures 8A-8B** illustrate two perspective views of some of the embodiments of the exemplary image recording system (in this embodiment comprising a camera (**6-1**), Plano convex small lens and aperture (**6-1a**), mirror (**6-4**), Plano convex large lens (**6-5**), and diffused light-emitting diode (LED) panel (**6-6**)) optically connected to a cartridge (**5**).

**Figure 9.** Exemplary manifold (**7-1**) comprising in this embodiment tube fittings (**7-1a**), custom machine manifold (**7-1b**), and custom molded rubber gaskets (**7-1c**).

**Figure 10.** Exemplary pressure control unit (**7**) comprising in this embodiment a distribution manifold (**7-2**), proportional regulators (**7-3**), and programmable logic controller (PLC) (**7-4**).

**Figure 11.** Exemplary graphical user interface (GUI) for controlling pressure control unit.

**Figure 12.** Plot of voltage at channels 1 (input), 2 and 3 over time with a 2V input to a pressure control unit (or pressure control system PCS) applied at 0.8 seconds.

**Figure 13.** Exemplary temperature control unit comprising in this embodiment a heat spreader plate (**8-1**) above a Peltier (heating/cooling device) (**8-2**), a mount platform (**8-3**) supporting the heat spreader plate, a heat sink (finned and fan for active cooling) (**8-4**), and a duct for the fan outlet (to reduce recirculation) (**8-5**). A microfluidic cartridge (**5**) rests or is held in place, on top of the heat spreader plate (8-1) of the temperature control unit that controls the temperature of the microfluidic cartridge (**5**).

**Figure 14.** Plot showing temperature control at various points on an exemplary cartridge.

**Figures 15A nd 15B.** Exemplary design in which microfluidic viscometer is contained within an external shell / case (**9**). FIG. 15A illustrates a prototype viscometer with clamp manifold (10) and cartridge shuttle (11) in view and FIG. 15B illustrates a viscometer instrument external shell.

**Figures 16A-16B.** FIG. 16A illustrates an exemplary microfluidic viscometer including multiplexed cartridge comprising ten microfluidic circuits, and an image captured **16B** using the exemplary viscometer, that can be used to generate data ("Viscosity Data") such as the NeoVisc data shown in **FIG. 17B.**

**Figures 17A and 17B. FIG. 17A** illustrates a graph comparing Newtonian glycerol (0-30% glycerol) viscosity data generated with a commercially available rotational rheometer compared to a viscometer embodiment provided herein (NeoVisc). **FIG. 17B** illustrates a graph comparing non-Newtonian polyethylene oxide (PEO) viscosity data generated with the rotational rheometer compared to a viscometer embodiment provided herein (NeoVisc).

**Figure 18** illustrates a graph of a test of an exemplary microfluidic viscometer assembly using 0-30% glycerol as the test fluid at 7121 Pa, 5105 Pa, and 2668 Pa.

**Figure 19** illustrates a graph of a test of an exemplary microfluidic viscometer assembly using water, 10% glycerol, 20% glycerol, or 30% glycerol as the test fluid.

**Figure 20** illustrates a graph with a comparison of data obtained using an exemplary microfluidic viscometer assembly (NeoVisc) and rheometer with 0-30% glycerol as the test fluid.

**Figure 21.** Comparison of data obtained using an exemplary microfluidic viscometer assembly (NeoVisc) and rheometer with 1% polyethylene oxide (PEO) as the test fluid.

**Figure 22** illustrates a graph with a comparison of data obtained using an exemplary microfluidic viscometer assembly (NeoVisc) and rheometer with BSA-containing solutions (up to 300 mg/ml) as the test fluids.

**Figure 23** illustrates a graph with a comparison of data obtained using an exemplary microfluidic viscometer assembly (NeoVisc) and rheometer with monoclonal antibody-containing solutions as the test fluids.

**Figure 24.** Exemplary microfluidic viscometer assembly using hydrostatic pressure.

## Summary of the Disclosure

This disclosure relates to microfluidic viscometers and assemblies comprising the same that can be used to determine the viscosity and/or other properties of a fluid. In some embodiments, this disclosure relates to a microfluidic viscometer assembly, the assembly comprising: a) a microfluidic cartridge comprising at least two microfluidic circuits, each microfluidic circuit comprising: an inlet; at least one microfluidic channel comprising: a first channel section having a first diameter and an end in direct fluidic communication with the inlet, and, a second channel section having an optically clear channel subsection, or being completely optically clear, and having a second diameter greater than the first diameter, wherein the second channel section is in direct fluidic communication with the first channel section at an end opposite the inlet; and, an outlet in fluid communication with the second channel section at an end opposite the first channel section, wherein the first channel section provides a resistance to a fluid traversing said microfluidic channel that is at least 80% and less than 100% of a combined resistance of the first and second channel sections, and/or of the microfluidic circuit; b) an image recording system optically connected to the optically clear channel section of the at least two microfluidic circuits; and, c) a pressure control unit, configured to deliver fluid into each of the at least two microfluidic circuits.

In some embodiments, this disclosure relates to a microfluidic viscometer assembly, the assembly comprising: a) a microfluidic cartridge comprising at least two microfluidic circuits, each microfluidic circuit comprising: i) an inlet; ii) an outlet; iii) at least one microfluidic channel comprising at least a first, second and third channel section, wherein: the first channel section is positioned between the second and third channel sections; the second channel section at opposite ends is in direct fluidic communication with the first channel section and the outlet, and includes an optically clear channel subsection, or is completely optically clear; the third channel section at opposite ends is in direct fluidic communication with the first channel section and the inlet; and, the first channel section provides a resistance that is at least 80% and less than 100% of the combined resistance encountered by a fluid traversing the first and second channel sections, and/or of the microfluidic circuit; b) an image recording system optically connected to the optically clear channel section of each of the at least two microfluidic circuits; and, c) a pressure control unit configured to deliver fluid into each of the at least two microfluidic circuits.

In some embodiments, this disclosure relates to methods for determining the viscosity and/or other property of a fluid using such a microfluidic viscometer assembly by determining the velocity at which said fluid is moving through said microfluidic channel. In some embodiments, this disclosure relates to methods for determining the viscosity of a fluid using such a microfluidic viscometer by: a) introducing a fluid into the microfluidic channel; b) capturing at least two images of a fluid-air interface between said fluid and air within the optically clear channel section of said microfluidic channel; c) comparing the at least two images to determine the position of said fluid-air interface in each image; and, d) determining the velocity at which said fluid is moving through said microchannel using the position of said fluid-air interface in each image; and optionally further calculating the shear stress, apparent shear rate, apparent viscosity, true shear rate, true viscosity, and/or other property, of said fluid.

In some embodiments, this disclosure relates to methods for determining the viscosity and/or other property of a fluid using such a microfluidic viscometer assembly by: a) introducing a first fluid into a first inlet to load the fluid into a first channel section of a first microfluidic circuit of a microfluidic cartridge comprising at least two microfluidic circuits, each microfluidic circuit comprising: an inlet; at least one microfluidic channel comprising: a first channel section having a first diameter and an end in direct fluidic communication with the inlet, and, a second channel section having an optically clear channel subsection, or being completely optically clear, and having a second diameter greater than the first diameter, wherein the second channel section is in direct fluidic communication with the first channel section at an end opposite the inlet, and, an outlet in fluid communication with the second channel section at an end opposite the first channel section, wherein the first channel section provides a resistance to a fluid traversing said microfluidic channel that is at least 80% and less than 100% of a combined resistance of the first and second channel sections, and/or of the microfluidic circuits; b) applying a constant pressure or a preset change in pressure over time, to said first channel section to move the fluid from the first channel section to the second channel section; c) determining the velocity at which said fluid is moving through said second channel section; and, d) using the velocity to determine the viscosity and/or other property of the first fluid.

In some embodiments, this disclosure relates to method for determining the viscosity of a fluid using such a microfluidic viscometer assembly by: a) introducing a first fluid into a first inlet to load the fluid into a microfluidic channel of a first microfluidic circuit of a microfluidic cartridge comprising at least two microfluidic circuits, each microfluidic circuit comprising: an inlet; an outlet; at least one microfluidic channel comprising at least a first, second and third channel section, wherein: the first channel section is positioned between the second and third channel sections; the second channel section at opposite ends is in direct fluidic communication with the first channel section and the outlet, and includes an optically clear channel subsection, or is completely optically clear; the third channel section at opposite ends is in direct fluidic communication with the first channel section and the inlet; and, the first channel section provides a resistance that is at least 80% and less than 100% of the combined resistance encountered by a fluid traversing the first and second channel sections, or of the microfluidic circuit; b) applying a constant pressure or a preset change in pressure over time, to said first channel section to move the fluid from the first channel section to the second channel section; c) determining the velocity at which said fluid is moving through said second channel section; and, d) using the velocity to determine the viscosity and/or other property of the first fluid.

In some embodiments, this disclosure relates to methods for determining the viscoelasticity of a fluid, said method comprising: a) introducing a first fluid into a first inlet to load the fluid into a first channel section, second channel section, and third channel section of a first microfluidic channel to create a first fluid-air interface in the second channel section, wherein the first microfluidic channel is part of a first microfluidic circuit of a microfluidic cartridge comprising at least two microfluidic circuits, each microfluidic circuit comprising: i) an inlet; ii) an outlet; iii) at least one microfluidic channel comprising at least a first, second and third channel section, wherein: the first channel section is positioned between the second and third channel sections; the second channel section at opposite ends is in direct fluidic communication with the first channel section and the outlet, and includes an optically clear channel subsection, or is completely optically clear; the third channel section at opposite ends is in direct fluidic communication with the first channel section and the inlet; and, the first channel section provides a resistance that is at least 80% and less than 100% of the combined resistance encountered by a fluid traversing the first and second channel sections, or of the microfluidic circuit; b) applying a positive pressure followed by a negative pressure to the first inlet to produce a pressure profile in the shape of a sine wave to the first microfluidic channel, thereby producing an oscillatory flow within the second channel section thereof; c) tracking movement of the fluid within the second channel section of the first microfluidic channel to generate a response sine curve; and, d) determining the viscoelasticity of the first fluid by comparing the response sine curve to the pressure profile.

In some embodiments, this disclosure relates to methods for determining the density of a fluid, said method comprising: a) introducing the fluid into a first sample reservoir to load the fluid, which can also be referred to herein as the fluid sample or the sample fluid, into a first inlet via a fluidic connection connecting the first sample reservoir to the first inlet, thereby loading the fluid into a first channel section of a first microfluidic circuit of a microfluidic cartridge comprising at least two microfluidic circuits, each microfluidic circuit comprising: i) an inlet; ii) at least one microfluidic channel comprising: a first channel section having a first diameter and an end in direct fluidic communication with the inlet, a second channel section having an optically clear channel subsection, or being completely optically clear, and having a second diameter greater than the first diameter, wherein the second channel section is in direct fluidic communication with the first channel section at an end opposite the inlet, and an outlet in fluid communication with the second channel section at an end opposite the first channel section, wherein the first channel section provides a resistance to a fluid traversing said microfluidic channel that is at least 80% and less than 100% of a combined resistance of the first and second channel sections, and/or of the microfluidic circuits; b) continuing to load the fluid from the first sample reservoir into the microfluidic circuit to move the fluid from said first channel section of the first microfluidic circuit to the second channel section; c) applying a constant pressure to the second channel section through the output; d) determining the velocity at which said fluid is moving through said second channel section of the first microfluidic circuit; and, e) using the velocity to determine the density of the fluid. In some embodiments, the velocity determination is used to determine when the fluid stops moving, and the density of the fluid is determined by measuring the pressure when the fluid stops moving.

In some embodiments, this disclosure relates to product(s) comprising at least one, and in illustrative embodiments at least two microfluidic viscometer microfluidic cartridges, each microfluidic cartridge comprising at least one microfluidic circuit through which said fluid can flow, each microfluidic circuit comprising: an inlet through which said fluid can be loaded into the microfluidic circuit; a microfluidic channel comprising a first channel section having a first diameter, and a second optically clear channel section having a second diameter greater than the first diameter, wherein the walls of the first channel section and the second channel section are comprised of the same or different non-deformable composition, and wherein the first channel section provides a resistance that is at least 80% (and in some embodiments at least 85%, 90%, or 95% of the resistance) and less than 100% of a combined resistance of the first and second channel sections; and, an outlet through which said fluid can exit the channel. In some embodiments, this disclosure relates to product(s) comprising at least one, and in illustrative embodiments, at least two microfluidic viscometer microfluidic cartridges, each microfluidic cartridge comprising: at least one microfluidic circuit through which said fluid can flow, each microfluidic circuit comprising: an inlet through which said fluid can be loaded into the microfluidic circuit; a microfluidic channel comprising a first channel section having a first diameter, a second channel section having a second diameter greater than the first diameter, a third optically clear channel section having a third diameter greater than the first diameter and optionally the same as the second diameter, wherein the first channel section provides a resistance that is at least 80% (and in some embodiments at least 85%, 90%, or 95% of the resistance) and less than 100% of a combined resistance of the first, second and third channel sections, and wherein the walls of the first, second and third channel sections comprise the same or different non-deformable composition; and, an outlet through which said fluid can exit the channel. In some such embodiments, the product(s) can further include a computer program stored on a computer memory, wherein the computer program comprises instructions for performing an image analysis function to determine velocity of a fluid through each of the microfluidic circuits and to use said velocity to determine a viscosity of the fluid, optionally wherein the image analysis function is a computer program stored on a remote computer server. Each cartridge provided herein, can be a plastic and in illustrative embodiments, disposable cartridge, and each cartridge can itself represent a separate embodiment.

In some subembodiments of any embodiment herein, the microfluidic viscometer assembly does not comprise a glass capillary in fluid communication with the microfluidic circuits and/or microfluidic channels.

Other embodiments are also contemplated and may be derived from this disclosure, as will be understood by those of ordinary skill in the art.

**Detailed Description of the Invention**

This disclosure relates to microfluidic viscometers and assemblies comprising the same that can be used to determine the viscosity and/or other properties of a fluid. The microfluidic viscometer in illustrative embodiments is part of a microfluidic viscometer assembly that comprises a microfluidic cartridge that comprises at least one, and in illustrative embodiments at least two microfluidic circuits comprising at least one microfluidic channel through which the fluid being tested may flow, a pressure controller for regulating the pressure applied to the fluid as it traverses the at least one microfluidic channel, and an imaging device for tracking movement of the fluid through the at least one microfluidic channel for determining the viscosity and/or other properties of the fluid. In some embodiments, the microfluidic channel comprises multiple channel sections or sections where at least a first channel section provides a higher resistance to flow of the fluid through that section than at least one second channel section(s) that provides less resistance to flow of the fluid than the first channel section, where images of the interface between the fluid and air (i.e., the fluid-air interface which may also be understood by those of ordinary skill in the art to be the fluid-air meniscus, and/or the leading visible edge of the fluid as it traverses the microfluidic channel) in the at least one second channel section are obtained and compared over time to determine the viscosity and/or other properties of the fluid. In preferred embodiments, the resistance encountered by a fluid as it traverses the first channel section (i.e., the high-resistance section) of the microfluidic channel accounts for at least 60%, 70%, 75%, 80%, 85%, 90%, 95%, or 98% and less than 100% (and preferably at least 80%, 85%, 90%, or 95%) of the resistance encountered by the fluid as it traverses the microfluidic channel (the first and second channel sections and optionally further sections thereof; and/or as it traverses the microfluidic circuit including the inlet and/or the outlet). In some embodiments, the first and second channel sections are continuous, meaning there are no intervening parts between the two sections and/or that the fluid flows directly from the first channel section into the second channel section without flowing through any other part such as, e.g., a connector. Typically, the microfluidic channel is part of a microfluidic circuit comprising an inlet through which fluid is typically introduced into the microfluidic channel, at least two or three sections of the microfluidic channel where at least one section of such microfluidic channel(s) applies higher resistance upon a fluid moving through it than is applied by at least one other section, and an outlet positioned opposite the inlet relative to the microfluidic channel through which fluid can exit the microfludic channel. In some embodiments, one or more microfluidic circuits are positioned within a microfluidic cartridge that can be inserted into, supported by, used with, and/or removed from the microfluidic viscometer. In some embodiments, the microfluidic viscometer assembly comprises multiple microfluidic channels (or microfluidid circuits and/or cartridge(s)) such that multiple fluid samples can be tested simultaneously (i.e., multiplex sample processing).

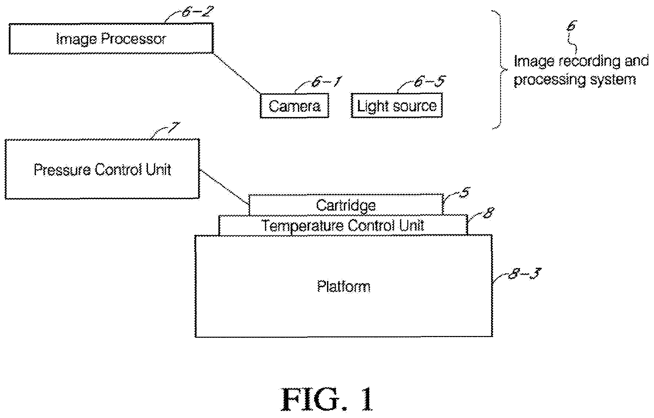

An illustrative overview of such a microfluidic viscometer assembly is provided by **FIG. 1.** As illustrated therein, the microfluidic viscometer typically includes a cartridge (**5**) comprising at least one microfluidic channel, and/or at least one microfluidic circuit comprising at least one microfluidic channel, a pressure control unit (**7**) connected to the cartridge to deliver constant pressure to drive the fluid being tested into and through each microfluidic channel and/or microfluidic circuit, an image recording system (**6**) (e.g., camera (**6-1**), image processor (**6-2**), light source (**6-5**)) optically connected to an optically clear section of the microfluidic channel and/or microfluidic circuit, a temperature control unit (**8**) for controlling the temperature of the cartridge (e.g., and each microfluidic channel and/or microfluidic circuit contained therein), and a platform (**8-3**) supporting the various components of the system. An "optically clear" section of a microfluidic channel is a section thereof through which an image of a fluid-air interface traversing said channel can be obtained using an image capture device such as a camera positioned such that an image of the fluid-air interface can be obtained thereby (e.g., above the cartridge in the illustrative assembly shown in **FIG. 1**) and, in some embodiments, a light source. An optically clear section can be, for example, partially or fully transparent. In some embodiments, a microfluidic channel and/or a section thereof, can be completely optically clear, i.e., optically clear along its entire length. As shown herein, the microfluidic viscometers and assemblies comprising the same described herein can be used to provide highly accurate and reproducible viscosity and other data for fluids, can be performed on low volume fluid samples (e.g. 5-25μL), and can carry out multiplexed viscosity measurements of both Newtonian and Non-Newtonian fluids.

## "Cartridge 1" with First Channel Architecture

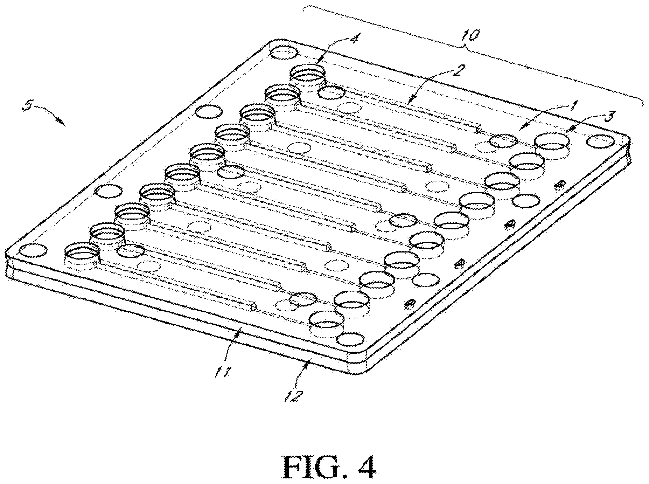

In some embodiments, a microfluidic viscometer assembly provided herein comprises a microfluidic cartridge comprising at least one and typically at least two microfluidic circuits, each comprising at least one microfluidic channel, wherein each microfluidic channel comprises multiple sections including at least one first channel section that provides the majority of the resistance a fluid encounters while traversing said microfluidic channel, and at least one second channel section of lower resistance that is at least partially optically clear (e.g., transparent; an optically-clear subsection; it may also be completely optically clear) such that the movement of the fluid can be monitored visually through the optically clear subsection as it traverses the microfluidic channel (e.g., at a fluid-air interface between the fluid and air in that optically clear section); an image recording system optionally linked to a processor that determines a viscosity of the fluid based on a comparison of the two or more of such images (e.g., digital images); and a pressure control unit configured, operable to, and/or adapted to deliver and push fluid into or through each of the circuit(s), and control pressure of the circuit, in illustrative embodiments, independently for each circuit, and automatically using a computer programmed to control, and connected to the pressure control unit. Thus, in some embodiments, the microfluidic viscometer assembly (e.g., apparatus) can comprise a microfluidic cartridge comprising at least one and, in illustrative embodiments, at least two microfluidic channels (e.g., each being part of a microfluidic circuit) having a first channel section of a first diameter and being fluidly connected to a second channel section comprising at least one optically clear subsection and a second diameter greater than the first diameter. In some embodiments, the first and second channel sections are continuous, meaning there are no intervening parts between the two sections and/or that the fluid flows directly from the first channel section into the second channel section without flowing through any other part such as, e.g., a connector. In these microfluidic channels, the first diameter (that of the first channel section) is sufficiently less than that of the second diameter (that of the second channel section) such that the first channel section provides at least 80% (e.g., at least 90% or at least 95%) of the resistance encountered by the fluid as it traverses the microfluidic channel (e.g., as it flows through the first and second channel sections). An illustrative embodiment of such a microfluidic circuit is provided by **FIG. 2A** in which the microfluidic channel includes a "Small section" representing the first channel section (**1**) and a "Large section" representing the second channel section (**2**) into which the fluid flows after exiting the first channel section. In the first channel section ("Small section" (**1**)), the fluid encounters the majority, and in some embodiments at least 60%, 70%, 75%, 80%, 85%, 90%, 95%, or 98% and less than 100% (preferably at least 80%, 85%, 90%, or 95%) of the resistance encountered as it traverses the microfluidic channel (and/or microfluidic circuit; i.e., including at least the first channel section (**1**) and second channel section (**2**) but also, in some embodiments, at least the inlet and in some embodiments also including the outlet). It is during the flow of fluid through the second channel section (**2**) that image acquisition occurs, e.g., specifically as the fluid traverses the optically clear subsection of this second channel section. The second channel section (**2**) may also be completely optically clear, i.e., optically clear along its entire length. In some embodiments, the microfluidic viscometer assembly comprises: a) a microfluidic cartridge comprising: a first channel architecture comprising at least two microfluidic circuits, each microfluidic circuit comprising an inlet, a microfluidic channel comprising a first channel section having a first diameter and an end in direct fluidic communication with the inlet, a second channel section having an optically clear channel section and a second diameter greater than the first diameter, wherein the second channel is in direct fluidic communication with the first channel section at an end opposite the inlet, and, an outlet in fluid communication with the second channel section at an end opposite the first channel section, wherein the first channel section provides resistance to the fluid as it traverses the microfluidic channel that is at least 60%, 70%, 75%, 80%, 85%, 90%, 95%, or 98% (preferably at least 80%, 85%, 90%, or 95%) and less than 100% of a combined resistance of the first channel section and the second channel section; b) an image recording system optically connected to the optically clear channel section of the second channel section(s) of the microfluidic channel(s) of the at least two microfluidic circuits; and c) a pressure control unit that drives fluid into each of the microfluidic circuits to which it is connected, in illustrative embodiments, at a constant pressure (including as part of a pressure ramp protocol). An illustrative embodiment of such a cartridge is provided by **FIG. 4.** The illustrative cartridge (**5**) therein can comprise a top (**11**) and bottom (**12**) layer of material (e.g., plastic), and multiple microfluidic circuits (**10**), with ten shown in this embodiment. Each microfluidic circuit (**10**) comprises an inlet (**3**), a microfluidic channel comprising a higher-resistance first channel section (**1**), a lower-resistance second channel section (**2**), and an outlet (**4**). As described below, the microfluidic circuits may be fabricated by any of the methods available to those of ordinary skill in the art.

## "Cartridge 2" with Alternative Channel Architecture

In some embodiments, a microfluidic viscometer assembly provided herein comprises a microfluidic cartridge comprising at least one and typically at least two microfluidic circuits, each comprising at least one microfluidic channel, wherein each microfluidic channel comprises multiple sections including at least a first higher-resistance and second lower-resistance section as described above, wherein the first channel section provides the majority of the resistance a fluid encounters while traversing said microfluidic channel, and at least a third channel section (also a lower-resistance section), wherein the second and third channel sections are positioned on either side of the first channel section, and where at least one or both of the second and/or third channel sections are at least partially optically clear (e.g., transparent; an optically clear subsection) such that the movement of the fluid can be monitored visually through the optically clear subsection to capture images of the fluid as it traverses the microfluidic channel (e.g., at a fluid-air interface between the fluid and air in that optically clear section); an image recording system optionally linked to a processor that determines a viscosity of the fluid based on a comparison of the two or more of such images (e.g., digital images); and, a pressure control unit configured, operable to, and/or adapted to deliver and push fluid into and through each of the circuit(s), and control pressure of the circuit, in illustrative embodiments, independently for each circuit, and automatically using a computer programmed to control, and connected to the pressure control unit. Thus, some embodiments, the microfluidic viscometer apparatus can comprise a microfluidic cartridge comprising at least one microfluidic channel (e.g., as part of a microfluidic circuit) including a first channel section of a first diameter, and second and third channel sections having diameters greater than that of the first diameter and including at least one optically clear subsection, wherein the first channel section is positioned between the second and third channel sections, and wherein the fluid encounters higher resistance in the first channel section relative to the second and/or third channel sections. In some embodiments, the resistance encountered by the fluid in the first channel section accounts for the majority, and in some embodiments at least 60%, 70%, 75%, 80%, 85%, 90%, 95%, or 98% and less than 100% (preferably at least 80%, 85%, 90%, or 95%) of the resistance encountered as it traverses the microfluidic channel (and/or microfluidic circuit; i.e., including at least the first (**1**) and second (**2B-2**) channel sections (or in the case of a "reverse" application the first large channel section (**2B-1**)) but also, in some embodiments, at least the inlet (**3**) and in some embodiments also including the outlet (**4**)). An illustrative embodiment of such a microfluidic circuit is provided by **FIG. 2B** in which the microfluidic channel includes a "Small section" representing the first channel section (**1**) (the higher-resistance section) and "Second large channel section" (**2B-2**), which is a lower-resistance section relative to the first channel section, into which the fluid flows after exiting the first channel section. In the first channel section ("Small section" (**1**)), the fluid encounters the majority, and in illustrative embodiments at least 60%, 70%, 75%, 80%, 85%, 90%, 95%, or 98% and less than 100% (preferably at least 80%, 85%, 90%, or 95%, or at least 80% and less than 100%) of the resistance encountered by the fluid as it traverses the microfluidic channel is encountered in the first channel section (**1**). In this embodiment, another (or third) section (**2B-1** (also called the "first large section")), also a lower-resistance section relative to the first channel section (**1**), is present between the inlet (**3**) and the first channel section (**1**) (also called the "small channel section"). In **FIG. 2B**, the second large channel section (**2B-2**) represents the lower-resistance channel section into which the fluid flows after exiting the higher-resistance first channel section (**1**). It is during the flow of fluid through this second large channel section (**2B-2**) (also called the "second large section") that image acquisition occurs, specifically as the fluid traverses the at least partially optically clear subsection of the second large channel section (**2B-2**) (the subsection being relevant where the second channel section is not completely optically clear). In some embodiments, the fluid can flow from the inlet towards the outlet (**4**), or in "reverse" embodiments, fluid may enter the microfluidic circuit through the outlet, then traverse the second large channel section (**2B-2**), then the small channel section (**1**), then the first large channel section (**2B-1**), exit the device through the inlet (**3**). In some embodiments, the microfluidic viscometer assembly can comprise: a) a microfluidic cartridge comprising a channel architecture (i.e., as "alternative" channel architecture) comprising at least one and typically at least two microfluidic circuits, each microfluidic circuit comprising an inlet, an outlet, at least one microfluidic channel comprising at least three sections (e.g., a small channel section (**1**) and two large channel sections (**2B-1** and **2B-2**) (illustrated in **FIG. 2B**), wherein: the first channel section (e.g., **1** in **FIG. 2B**) is positioned between the other two sections (e.g., second and third, or first large channel section (**2B-1**) and second large channel section (e.g., **2B-2**)); the second large section (e.g., **2B-2**) at opposite ends is in direct fluidic communication with the first channel section (e.g., **1**) and the outlet (e.g., **4**), and includes an optically clear channel subsection, or is completely optically clear; the first large section (i.e., third channel section; e.g., **2B-1**) is in direct fluidic communication with the inlet (e.g., **3**); and, the first channel section (e.g., **1**) provides a resistance that is at least 60%, 70%, 75%, 80%, 85%, 90%, 95%, or 98% and less than 100% (preferably at least 80%, 85%, 90%, or 95%, or at least 80% and less than 100%) of the combined resistance applied to, or encountered by, a fluid traversing, the microfluidic channel (i.e., the first (**1**) and second large (**2B-2**) channel sections as illustrated in **FIG. 2B**), and/or of the microfluidic circuits (i.e., including at least the first channel section (**1**) and second channel section (**2**) but also, in some embodiments, at least the inlet and in some embodiments also including the outlet); and an outlet (e.g., **4**) in fluid communication with the second large channel section (**2B-2**) at an end opposite the first channel section (1); b) an image recording system optically connected to the optically clear channel section of each of the at least one or at least two microfluidic circuits; and, c) a pressure control unit configured to deliver fluid into each of the at least one or at least two microfluidic circuits, and, in illustrative embodiments at a constant pressure (including as part of a pressure ramp protocol). In some embodiments, the cartridge can comprise multiple microfluidic channels and/or microfluidic circuits. In some embodiments, the cartridge can take the form shown in **FIG. 4**, but in which the microfluidic channels and/or circuits include the three sections described herein, e.g., as illustrated as parts **2B-1, 1,** and **2B-2** in **FIG. 2B**.

In some embodiments, the microfluidic viscometer assembly comprises at least one microfluidic circuit comprising at least one microfluidic channel as described herein, and/or a cartridge(s) comprising one or more of the same (in some embodiments, preferably at least two microfluidic circuits), an image recording system optically connected to the optically clear section of a lower-resistance section of the microfluidic channel (e.g., part **2** in **FIG. 2A** or part **2B-2** of **FIG. 2B**), and a pressure control unit that delivers and pushes fluid into and through each microfluidic channel, in illustrative embodiments, at a constant pressure (including as part of a pressure ramp protocol). In some embodiments, the microfluidic viscometer apparatus assembly further comprises a temperature control unit that serves to control the temperature of the cartridge(s) and the one or more microfluidic circuits and microfluidic channels. Illustrative embodiments of such microfluidic viscometer assemblies are provided by **FIGS. 1, 5,** and **6.** In use, the image recording system operates by capturing images of the fluid as it traverses the microfluidic channel and/or microfluidic circuit (typically the optically-clear subsection of a lower-resistance section), comparing those images and thereby determining the viscosity and/or other properties of the fluid. As described above, each microfluidic channel and/or microfluidic circuit comprises at least one section through which the fluid flows and encounters a first resistance higher than a second resistance encountered in a subsequent section through which the fluid is moving. The images obtained are of the fluid (specifically, in some embodiments, the fluid-air interface) as it traverses a section exhibiting lower resistance to the flow of the fluid as compared to the immediately preceding higher-resistance section through which the fluid flowed. Microfluidic channels comprising first and second channel sections wherein the resistance is higher in the first channel section than the second channel section are shown in shown in **FIG. 2A** (i.e., higher resistance small channel section (1), lower resistance large section (2)); **FIG. 2B** (i.e., higher resistance small channel section **(1),** lower resistance second large channel section **(2B-2)), FIGS. 3A, 3B 3C, and 3D** (i.e., higher resistance first channel section **(1),** lower resistance second channel section **(2)), FIGS. 3A, 3B, AND 3C** (i.e., higher resistance first channel section **(1),** lower resistance second channel section **(2)),** and **FIG. 3D** (i.e., higher resistance first channel section **(1),** lower resistance second channel section **(2B-2)).** As shown in the non-limiting illustrative embodiment of **FIGS. 3A** and **3B,** the fluid (represented by hatch pattern shading in these illustrations) can be initially loaded into the inlet **(3),** thereby "priming" the microfluidic channel (e.g., fluid is allowed to fill the higher resistance first channel section (1), and enter but not fill the lower-resistance second channel section **(2)).** The microfluidic channel is then pressurized to begin pushing the fluid through the microfluidic channel. In the illustrative embodiment shown in **FIGS. 3A and 3B**, a first image can be acquired at a first point ("Measurement 1" or "first measurement"; e.g., once the fluid has traversed approximately 25% of the distance of the second channel section, **FIG. 3A**). The microfluidic channel is then depressurized in preparation for the next measurement. The microfluidic channel is then pressurized again and an additional image obtained at the next selected point ("Measurement 2" or "second measurement"; e.g., at the 50% point of the second channel section). This process can be repeated until a sufficient number of images are obtained (e.g., "Measurement 3" or third measurement, "Measurement 4" or fourth measurement, etc. in **FIGS. 3A** and **3B).** Thus, images are obtained at times $t_0$, $t_1$, $t_2$, $t_3$, $t_4$, etc., respectively). **FIG. 3C** illustrates an embodiment where a first measurement and a second measurement are taken at times $t_0$ and $t_1$, respectively. The images are then compared using a processor in order to determine the velocity at which the fluid traversed the second channel section of the microfluidic channel, and the viscosity determined. As explained in more detail below, an algorithm can be applied to determine the rate at which the fluid traversed the microfluidic channel and, thereby, the viscosity and/or other properties of the fluid can be determined.

This process is also illustrated in **FIG. 3D** for a microfluidic circuit comprising a microfluidic channel having at least three sections, including at least one of such sections in which a fluid encounters greater resistance than in adjoining sections (e.g., as explained above with reference to **FIG. 3C). FIG. 3D** illustrates the flow of fluid through an exemplary microfluidic cartridge comprising a microfluidic channel (or microfluidic circuit) having at least three section where the majority of the resistance the fluid encounters while traversing the microfluidic channel is in one of those sections (a higher-resistance section) which a fluid flows through before entering a section of lower resistance. As illustrated in **FIG. 3D,** in one embodiment, the fluid can be loaded into the input (3) of the microfluidic circuit, and pressure applied to push the fluid through the microfluidic channel (here, the lower-resistance first large channel section **2B-1).** The fluid then flows through the higher-resistance channel section **(1),** and then into the lower-resistance second large channel section **(2B-2).** Either or both of lower-resistance large sections **2B-1** and **2B-2** can comprise at least one optically clear subsection, or may be completely optically clear. Images of the fluid-air interface within a lower-resistance section (e.g., the second large channel section **(2B-2))** are obtained at an initial time point ($t_0$) and at least one other time point ($t_1$), and compared. The images are then compared using a processor in order to determine the velocity at which the fluid traversed the lower-resistance second large channel section **(2B-2)** of the microfluidic channel, and the viscosity determined. As explained in more detail below, an algorithm can be applied to determine the rate at which the fluid traversed the microfluidic channel and, thereby, the viscosity and/or other properties of the fluid can be determined.

As discussed briefly above, the microfluidic viscometer assembly can include a cartridge comprising multiple microfluidic channels and/or microfluidic circuits. **FIG. 4** illustrates one such exemplary microfluidic cartridge comprising multiple microfluidic circuits **(10;** in this embodiment, ten microfluidic circuits are illustrated) that each comprise an inlet **(3),** a microfluidic channel comprising a higher-resistance first channel section **(1),** and a second lower-resistance section **(2),** and an outlet **(4)** through which the fluid can exit the microfluidic circuit. In some "reverse" embodiments, the fluid can be introduced into the microfluidic channel through the outlet, traverse the microfluidic channel in the "reverse" direction, and exit the microfluidic channel through the inlet. As described above for such microfluidic circuits, the majority of the resistance a fluid traversing the same is encountered in the first channel section (**1** in **FIG. 4**) of the microfluidic channel. Multiple images are captured of the fluid as it traverses the lower-resistance section (**2** in FIG. 4) following the higher-resistance section, and can be obtained simultaneously for some or all of the fluids traversing different microfluidic channels in a cartridge. The images obtained for a particular fluid can then be compared, as described in greater detail below, in order to ascertain the viscosity and/or other property of each fluid being tested in each microfluidic circuit. The fluids in each microfluidic circuit may be the same or different, and one or some of the microfluidic circuit(s) can also include one or more control (e.g., reference) fluids, although in certain illustrative embodiments, there are no control or reference fluids loaded into a cartridge.

As discussed above, the microfluidic channel(s) of the microfluidic viscometer include at least two sections where at least one of those sections, sometimes called herein the "first channel section," "small section," "resistance section," "relatively high resistance section," or "high resistance section," provides the majority of the resistance encountered by a fluid as it traverses the microfluidic channel (e.g., the first channel section (1) ("Small section") of the exemplary microfluidic channel illustrated in **FIG. 2A** and in **FIG. 2B**). These sections provide the majority of the resistance encountered by the fluid as it traverses the microfluidic channel and/or microfluidic circuit. The microfluidic channels should be designed such that the flow is one dimensional from the inlet to the outlet (e.g., through the first channel section (small section)), and entrance effects (i.e., resistance encountered as the fluid enters the microfluidic circuit) are negligible. A skilled artisan will understand based on the teachings herein, that a range of lengths and widths can be used for the channels and sections thereof, of a microfluidic cartridge herein provided that the majority (or in some embodiments, at least 60%, 70%, 75%, 80%, 85%, 90%, 95%, or 98% (preferably at least 80%, 85%, 90%, or 95%, and less than 100%, or at least 80% and less than 100%) of the resistance in a microfluidic circuit is provided by this first channel section (small section; **1** in **FIGS. 2A** and **2B**). In an illustrative embodiment described in the Examples, the first channel section (small section) can have a height (h) of about 30 um (i.e., 27-33 um), a width of about 500 um (i.e., 494-501 um), and a length of about 1cm (i.e., 0.97 cm); the height/width (h/w) aspect ratio of the first channel section of this exemplary microfluidic circuit was 0.06. In illustrative embodiments, the h/w aspect ratio for the first channel section (small section) can be, for instance, less than 0.2, or in illustrative embodiments less than 0.1, such as any of 0.09, 0.08, 0.07, 0.06, 0.05, 0.04, 0.03, 0.02, or 0.01, or between 0.2 or 0.1 on the high end and 0.09, 0.08, 0.07, 0.06, 0.05, 0.04, 0.03, 0.02, or 0.01 on the low end. The section(s) providing lower resistance (large section(s)) in the Examples, which includes the larger section to which the image recording system is optically connected (which can be called herein, the "second channel section," "viewing section," or "fluid speed measuring section") have a height (h) and width (w) of about 1000 um (i.e., height: 910-960 um and width: 980-1100 um), and a length of about 3cm (i.e., 2.7 cm), such that the h/w aspect ratio of the lower resistance section is 1. In illustrative embodiments, the h/w aspect ratio for the lower resistance (large section(s)) can be, for instance, between 0.5 and 1.5, 0.75 and 1.25, 0.8 and 1.2, 0.9 and 1.1, or 0,95 and 1.05, but in any event is greater than that of the higher-resistance large section(s). In the embodiments in which three sections are present in the microfluidic channel (i.e., the alternate channel architecture described above), and where a second and third channel section (e.g., first and second large sections (e.g., 2B-1 and 2B-2 as illustrated in **FIGS. 2B** and **3D**) are positioned on either side of the first channel section (small section, **1** in **FIGS. 2B** and **3D**) in which the majority of the resistance encountered by the fluid as it traverses the microfluidic channel is encountered , the dimensions of the two large sections can, in illustrative embodiments, and in some preferred embodiments, be the same to avoid capillary effects that could occur if those dimensions differed. While the microfluidic channels and/or sections thereof may be of many different shapes (e.g., circular, oval triangular, square, rectangle), these are typically constructed as rectangular or trapezoidal channels. While the lower-resistance (large) sections of the microfluidic channels can be circular, the section(s) (small section) providing the higher resistance to the fluid is typically not circular in shape. The different sections of the microfluidic channel(s) are typically the same shape but can differ, and in one illustrative embodiment, have a rectangular shape. As used herein, "diameter" means "effective diameter", or "hydraulic diameter", for embodiments having channels or sections therein, that have a shape other than circular. It is important, and preferred that, in whatever form the channels take and/or are constructed, the microfluidic circuit, and at least the microfluidic channel, provides laminar flow conditions and uniform flow to avoid turbulent flow and/or vortex formation therein as the fluid traverses the microfluidic channel(s). In illustrative embodiments, the inlet(s) and outlet(s) were circular (5 mm diameters), and between ten and 30 ul are typically loaded into the inlet for analysis, but this could vary as may be determined by those of ordinary skill in the art.

In some embodiments, the microfluidic circuits and microfluidic channels may be prepared from any suitable material such as plastic. In some embodiments, the microfluidic circuit and microfluidic channel can be fabricated using a soft lithography technique. In some embodiments, the cartridges can be injection molded using a suitable plastic. In some embodiments, as illustrated in **FIG. 4**, the microfluidic circuit(s) can be fabricated in or on a top layer of plastic (top layer **11**) and bonded to a second flat piece (bottom layer **12**) to form the cartridge body. In some embodiments, the microfluidic circuit can be manufactured upon, within, or as the top layer **10**. In some embodiments, a bottom layer such as **12** in **FIG. 4** is not included. In some embodiments, the microfluidic channel(s) should be non-deformable, meaning, e.g., that it does not expand in a manner that affects the viscosity measurement when, for instance, high pressures are used, and/or that the microfluidic channels are not comprised of an elastomeric material. In some embodiments, the microfluidic circuits may be fabricated by molding (e.g., injection molding), engraving, microcontact printing, additive manufacturing (e.g., 3D printing), hot embossing, laser photoablation, micro-milling, etching (e.g., wet, dry (e.g., physical, dry), or reactive ion etching), or other suitable technique. In some embodiments, the microfluidic circuits and/or microfluidic channels may be made of silicon, glass, a ceramic material, thermoplastic polymer (e.g., polystyrene (PS), polyether ether ketone (PEEK), polyethylene terephthalate (PET), polyvinyl chloride (PVC), polymethylmethacrylate (PMMA), cyclic olefin copolymer (COC), polycarbonate (PC), and/or PEI (polyetherimide)), and/or a thermoset (e.g., thermoset polyester (TPE). Other techniques and/or materials may also be suitable, as may be determined by those of ordinary skill in the art.

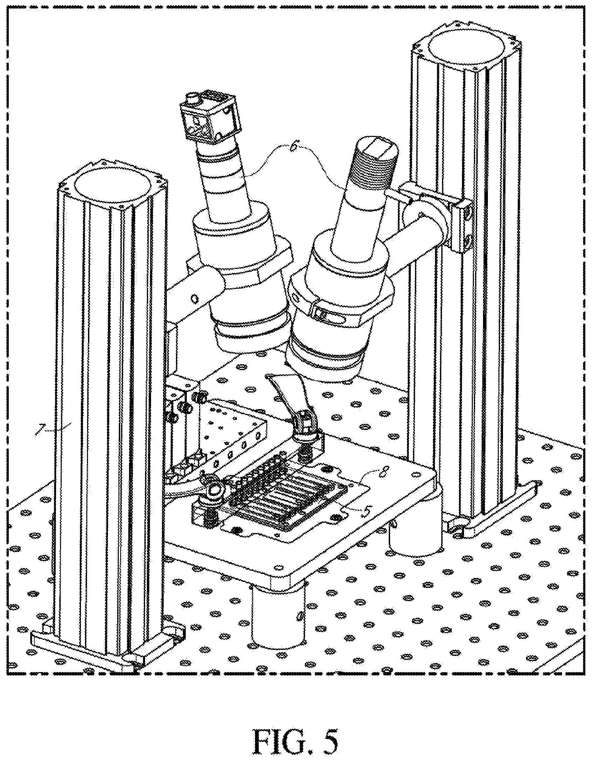

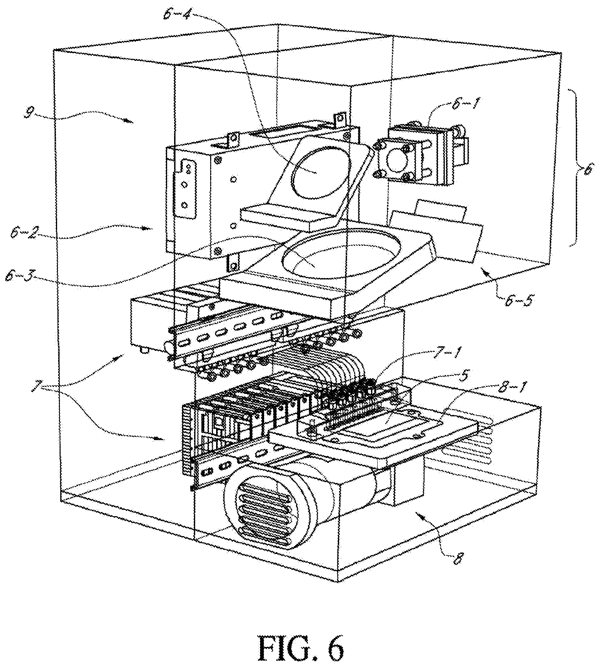

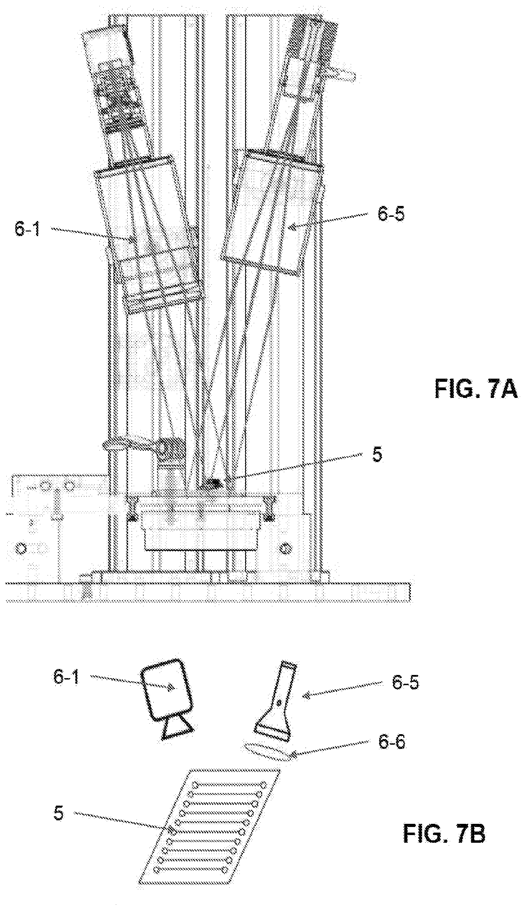

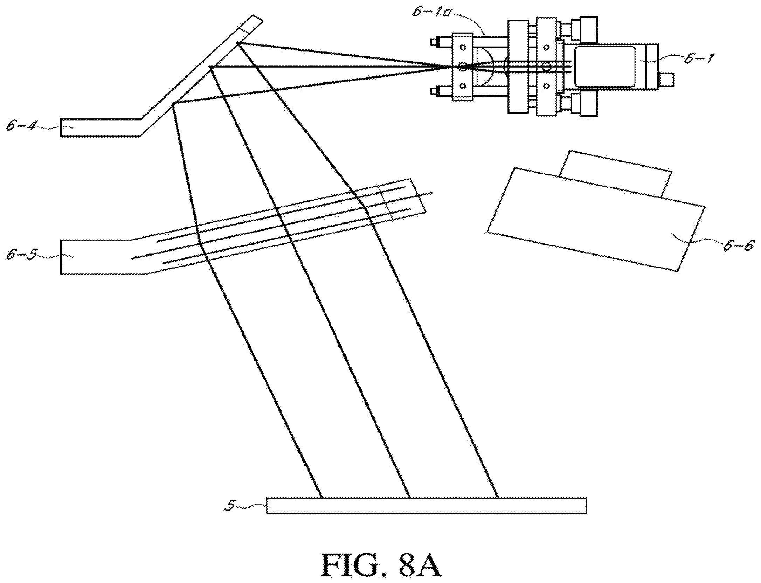

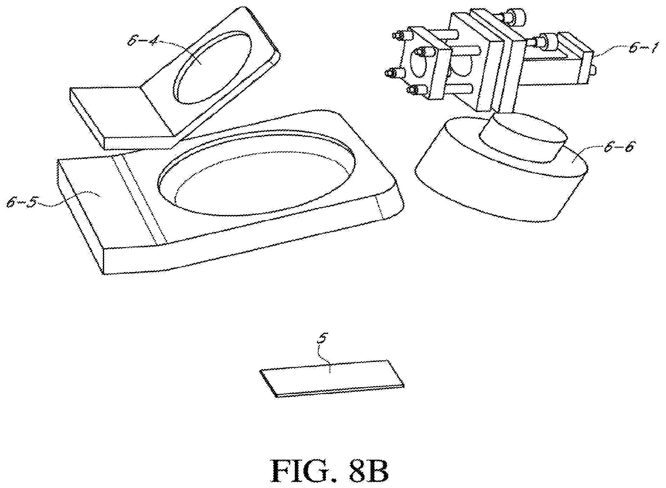

The exemplary microfluidic viscometer assemblies illustrated in **FIGS. 1, 5** and **6** include, but are not limited to, an image recording and processing system, a pressure control unit, and a temperature control unit. The image recording and processing system can comprise at least a light source, a recording device (e.g., a camera), and an image processor communicably coupled to the imaging device that determines a viscosity and/or other properties of the fluid based on the two or more images using one or more algorithms (such as, e.g., those described below for Newtonian and non-Newtonian fluids). The light source and recording device (e.g., camera) are typically positioned to capture two or more images of the fluid-air interface present at the front (or leading) edge of the fluid (i.e., the fluid-air interface) as it traverses the microfluidic channel (e.g., above the cartridge (5) (as illustrated in **FIGS. 5-8**)), in some embodiments above the lower-resistance section (e.g., the optically clear section thereof) of the microfluidic channel (**FIG. 4**)). In some embodiments, as illustrated in **FIGS. 6-8,** the image recording portion of the system can comprise a camera (6-1), a small Plano convex lens and aperture (6-1a), a mirror (6-4), a large Plano convex lens (6-5), and a diffuse light source (e.g., diffused light-emitting diode panel (6-6)), positioned in so as to illuminate and provide contrast at the fluid-air interface in the optically-clear section of a microfluidic channel and such that each image of the fluid-air interface is transmitted to and captured by the camera for processing by the image processor (6-2). Suitable, exemplary image processors (e.g., imaging processing systems) can include, for instance, a general purpose computer comprising Matlab (Mathworks, Boston, MA), Image J (an open source image analysis system), or other system as may be available to those of ordinary skill in the art. In some embodiments, the image processor is integrated into or wirelessly connected to the recording device (e.g., digital camera). Thus, in some embodiments, microfluidic viscometer can include a smartphone, a tablet, a personal digital device, a computer pad, a netbook, and/or a computer having imaging processor and/or digital camera integrated therein, or a camera *per se.* In some embodiments, the camera may be one of a Charge-Coupled Device (CCD) or Complimentary Metal-oxide Semiconductor (CMOS) camera. Suitable light sources can include, in some embodiments, at least one Light Emitting Diode (LED) or LED panel. The at least one LED may be a colored LED. An excitation filter may filter the at least one LED. At least one such light source (e.g., LED or LED panel) may be symmetrically positioned off-axis from the camera with reference to the array. The system can also include an emission filter for filtering light entering the camera.

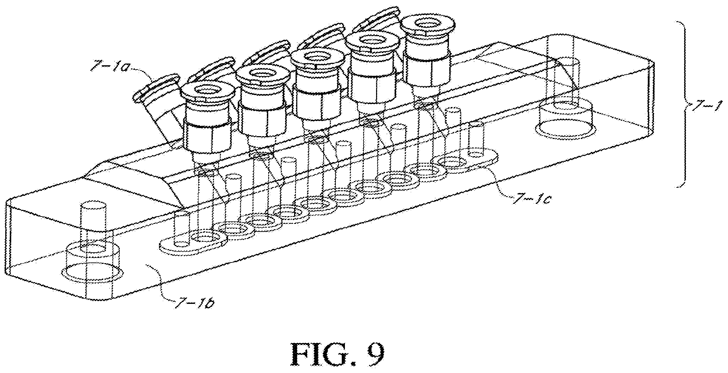

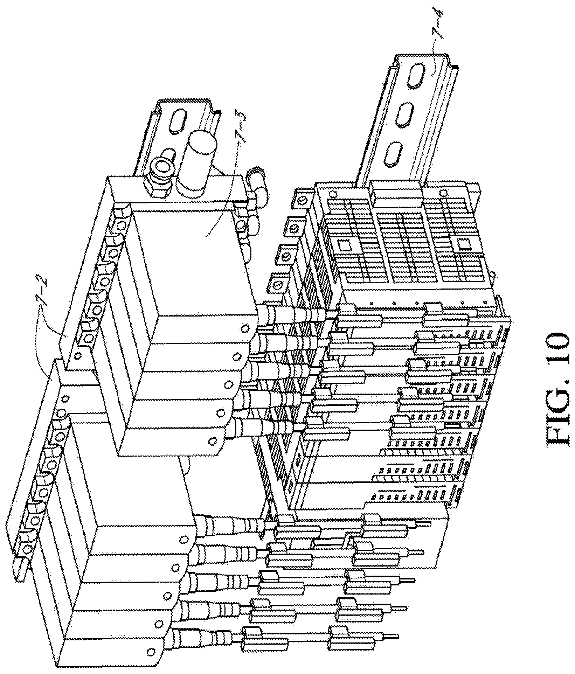

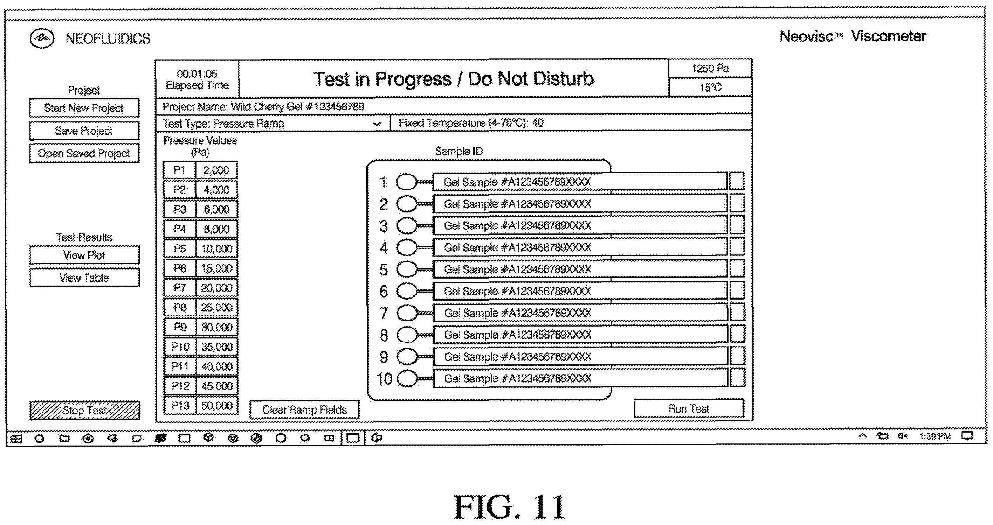

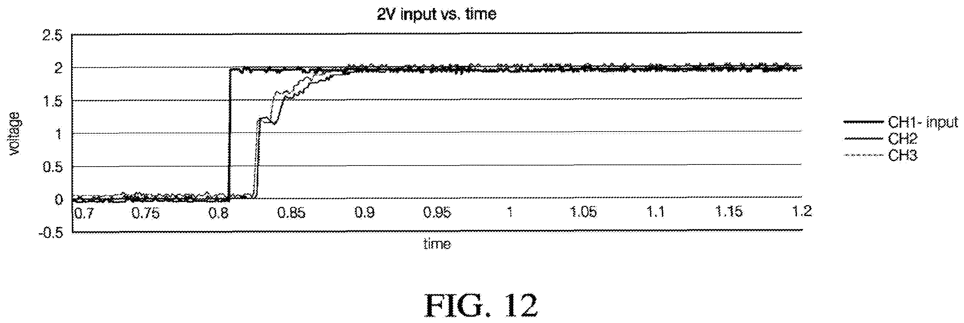

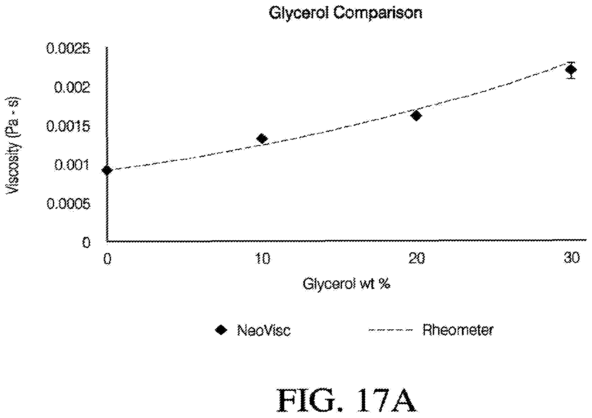

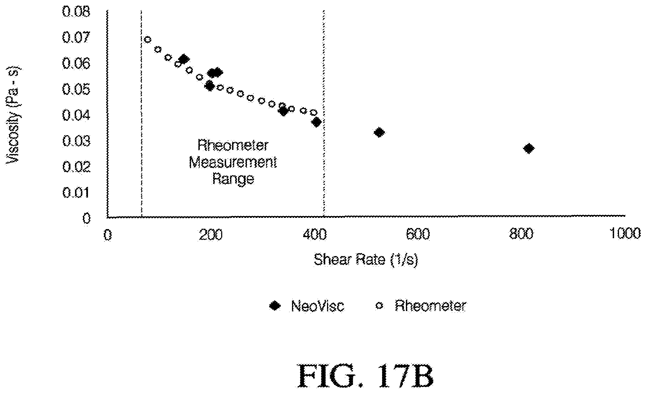

The pressure control unit provides a known pressure at the inlet of the cartridge that pushes the fluid through the microfluidic channels at a constant rate. In some embodiments, the pressure control unit comprises a manifold (part 7-1 in **FIG. 9**) connected to the microfluidic circuits (e.g, within the cartridge, and sealing it) (**FIGS. 6, 9-10**) connected to a pressure architecture comprising a distribution manifold (7-2) that holds the pressure regulators in place, proportional regulators (7-3), and one or more programmable logic controllers (PLC such as din-rail mounted modules (7-4)) (**FIG. 10**) that, in some embodiments, is interfaced with software controlled by a graphical user interface (GUI) (an illustrative example of which is shown in **FIG. 11**). A pneumatic manifold can clamp down over the cartridge inlets to seal the same. Tubing connected to the ten pressure regulators can be fed into the manifold to supply pressure to each microfluidic circuit and/or microfluidic channel. In some embodiments, such as those in which multiple microfluidic circuits are present in a cartridge, valves can be used to shut off pressure to individual microfluidic circuits (e.g., if each microfluidic circuit does not have its own pressure regulator). In preferred embodiments, however, pressure can be controlled for each separate microfluidic circuit, and valves are not necessary. Using the GUI to communicate with a computer controller running a computer program, the user can set the desired pressure(s) for each test, e.g., one constant pressure or a pressure ramp with a series of different pressure steps (e.g., a pressure ramp). In using a pressure ramp, the user can load a fluid into the microfluidic circuit, and as the fluid traverses the microfluidic channel, multiple different pressures can be applied to each microfluidic circuit, and measurements obtained at each pressure (as in the Examples section below). In this way, the user can obtain a curve for viscosity versus shear rate with only one fluid sample/run. As shown in **FIG. 12** the pressure control unit of the microfluidic viscometer was capable of providing pressures approximately equal to the target pressure in two separate channels simultaneously ("ch2 avg." and "ch3 avg."). The target voltage of 2.000 volts recorded an average input voltage of 1.954 volts, with channel 1 average voltage of 1.950 volts and channel 2 average voltage of 2.003 volts. Furthermore, the pressure control unit or pressure control system (PCS) provided similar plots at other voltage inputs. As in the illustrative examples below, a suitable pressure control unit should be able to apply a controllable constant pressure (or a pressure ramp) of from about zero to 100,000 Pa (e.g., about any of 1000, 2000, 3000, 4000, 5000, 6000, 7000, 8000, 9000, 10000, 11000, 12000, 13000, 14000, 15000, 16000, 17000, 18000, 19000, 20000, 30000, 40000, 50000, 60000, 70000, 80000, 90000, or 100000, or between about 1000 to about 20,000 Pa, and/or any Pa value in between, such as those used in the Example) to a particular microfluidic circuit and/or microfluidic channel (i.e., the fluid therein), that pressure being the same or different as that being applied in any other microfluidic circuit and/or microfluidic channel. Thus, in multiplex applications, an illustrative pressure control unit should be capable of applying different constant pressures (or pressure ramps) to the various microfluidic channels being used (e.g., being contained within a cartridge). In illustrative embodiments, the constant pressure is controllably variable (i.e., tunable) in order to generate particularly informative viscosity curves (e.g., the "Viscosity Data" shown in **FIGS. 17A and 17B** and carried out in the examples (e.g., **Tables 1-5**)). For instance, as illustrated in **FIG. 6,** the manifold can provide an individual linkage (and therefore pressure control) between a particular microfluidic channel and the pressure control unit such that the pressure being applied to each can be the same or different depending on the particular application (e.g., using tubing connecting individual microfluidic channels to the pressure control unit (**FIG. 6**)). Thus, in some embodiments, the pressure control unit can be programmed (or can be programmable) to drive fluid into each of the microfluidic circuits to deliver a constant pressure thereto, wherein the pressure is substantially the same, the same, or different in each microfluidic circuit. The pressure may also be modified over time within a single microfluidic circuit, as when a user applies incorporates a pressure ramp into a method for using the microfluidic viscometer. In some embodiments, the pressure control unit is automatically controlled (e.g., using software) such that a computer central processing unit is programmed, and can be controlled by a user, such as through a graphical user interface, to perform this function. Accordingly, in some embodiments, the pressure control unit is adapted for, configured to, and/or operable to provide a change in pressure over time to a connected microfluidic circuit(s), and in some embodiments to each microfluidic circuit of an assembly of at least two microfluidic circuits independently and in some embodiments simultaneously. In illustrative embodiments, such change in pressure can be preset, for example by a user. In some embodiments, the pressure control unit controls the pressure applied to each of the microfluidic circuits, or wherein two or more pressure control units each separately control the pressure applied to at least two of said microfluidic circuits. Suitable, exemplary pressure control units can include, for instance, the Microfluidic Pressure controller OB1 MK3 (Elveflow), among others as may be available to those of ordinary skill in the art.

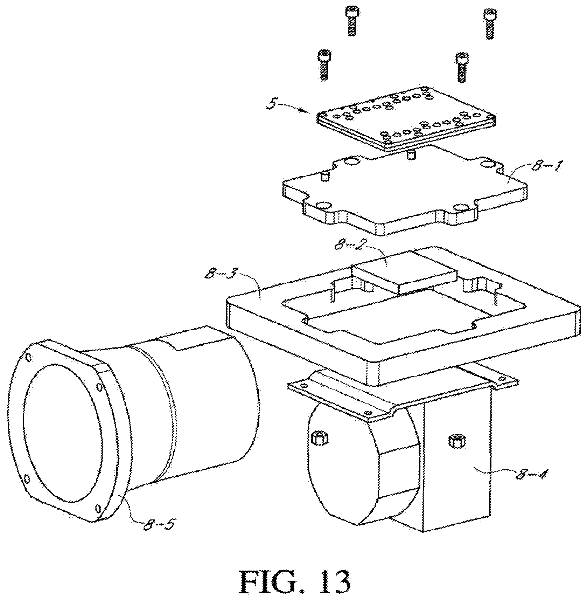

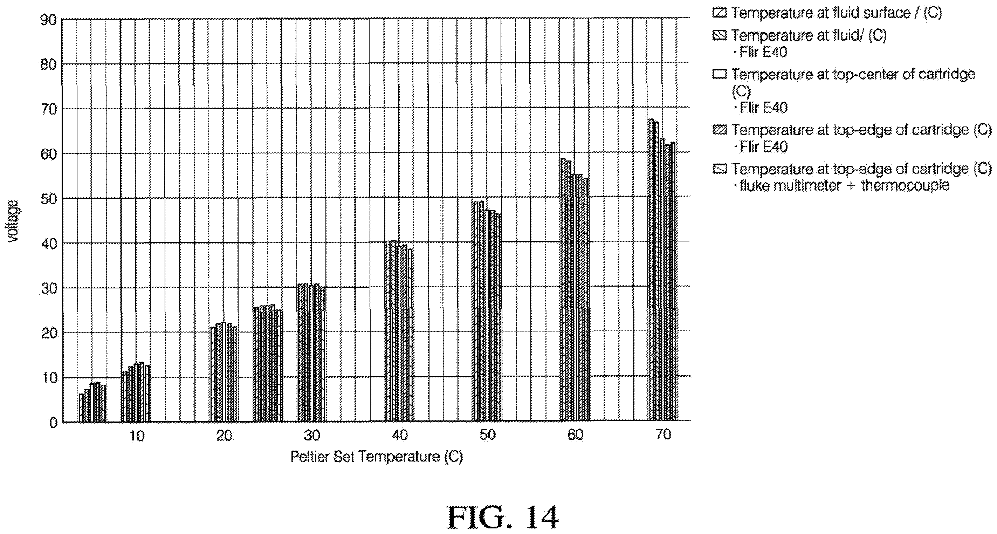

The temperature control unit controls the temperature of the cartridge and/or microfluidic channel and/or microfluidic circuit. Temperature is an important factor that affects the viscosity of the fluid and it is important that the temperature of the fluid remain constant as the fluid is traversing the microfluidic circuit. Suitable temperature control units that can be used in the microfluidic viscometers disclosed herein can include, for instance, the illustrative temperature control unit illustrated in **FIG. 13** comprising a temperature controlled thermal block that can include a Peltier device, a heat spreader plate or heat transfer pad, a temperature controlled circulating fluid, and/or the like. The illustrative example shown in **FIG. 13** includes, for instance, a cartridge **(5)** on a heat spreader plate **(8-1)** upon a Peltier device (heating/cooling device) **(8-2),** a mount platform **(8-3)** supporting the heat spreader plate, a heat sink (finned and fan for active cooling) **(8-4),** and a duct for the fan outlet (to reduce recirculation) **(8-5).** In some embodiments, the thermal block may be part of a thermal cycler having at least one thermally controlled surface. Thus, in some embodiments, the temperature control unit comprises a heat spreader plate upon which a cartridge may be positioned, a Peltier (heating/cooling device) beneath the heat spreader plate, a duct for an inlet fan, as well as a heat sink (e.g., finned) and fan for active cooling. As shown in **FIG. 14,** the exemplary temperature control unit used in the examples was found to maintain the desired temperature at, e.g., the fluid surface, the fluid, the top-center of the cartridge, and the top edge of the microfluidic cartridge. Thus, in some embodiments, the microfluidic viscometer can include, and preferably includes, a temperature control unit that controls the temperature of the microfluidic cartridge, optionally wherein the microfluidic cartridge contacts a conductive thermal plate having a temperature controlled by the temperature control unit. In some embodiments, the temperature control unit is automatically controlled (e.g., using software). In some embodiments, the temperature control unit is adapted for, configured for, and/or effective for maintaining the temperature of the microfluidic circuits in a microfluidic cartridge, or wherein two or more temperature control units separately maintain the temperature of at least two of said microfluidic circuits. In some embodiments, the Meerstetter TEC-1090-HV may be used. Other temperature control units may also be suitable, as may be determined by those of ordinary skill in the art.

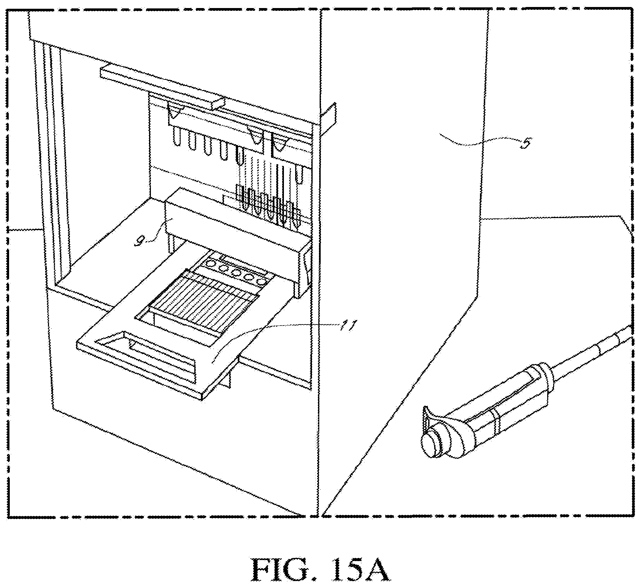

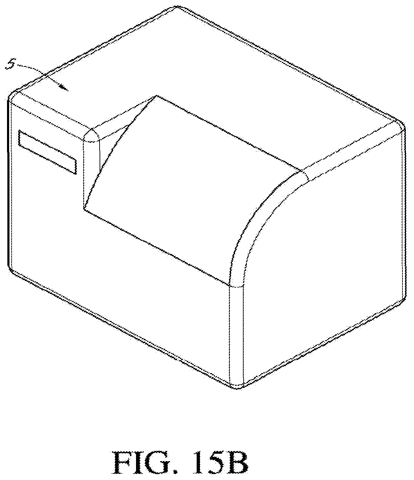

In some embodiments, the microfluidic viscometer may be encased by, for instance a hard shell or case around some or all of the components. For instance, **FIGS. 15A-15B** provides an example of an integrated microfluidic viscometer assembly or system in which the image recording and processing system, pressure control unit, and temperature control unit are essentially hidden from view of the user by a solid case or external shell **(9).** In that illustrative embodiment, the cartridge comprising the microfluidic circuit(s) can be inserted into the device for analysis, and removed from the device following analysis, using a cartridge shuttle **(11).** Also as shown in **FIG. 15A,** in some embodiments, the cartridge may be held in place once inserted into the device by connecting it to the manifold, in some instances using a clamp **(10).** The hard shell or case **(9)** may be constructed of any suitable material such as hard plastic commonly used by those of skill in the art to house analytical instruments as shown in **FIG. 15B.** In some embodiments, such an integrated microfluidic viscometer system can also comprise or provide for using multiple cartridges (e.g., two, four, eight, 16, 32 or 64 cartridges), each optionally comprising at least one, and typically two or more microfluidic circuits, and the option to test the same or different fluids in each cartridge and/or microfluidic circuit at the same or different pressures and/or temperatures. Other versions of such integrated microfluidic viscometer systems may also be suitable, as may be determined by those of ordinary skill in the art.

This disclosure also relates to methods for using a microfluidic viscometer assembly disclosed herein to determine the viscosity and/or other property of a fluid or a collection of fluids (e.g., using a cartridge comprising multiple microfluidic channels and/or microfluidic circuits (e.g., as illustrated in **FIGS. 3A-3D)).** As described above, in some embodiments, this disclosure relates to microfluidic viscometer instruments or apparatuses onto which at least one such microfluidic cartridge can be loaded, and which include an image recording and optionally analysis system (e.g., light, camera, optional image processor), a pressure control unit, and typically also comprising a temperature control unit (e.g., **FIGS. 1, 4-5**). These various systems and units of a microfluidic viscometer instrument or apparatus herein when used with a microfluidic cartridge herein, are configured, adapted to, and effective for determining the viscosity and other characteristics of a fluid.

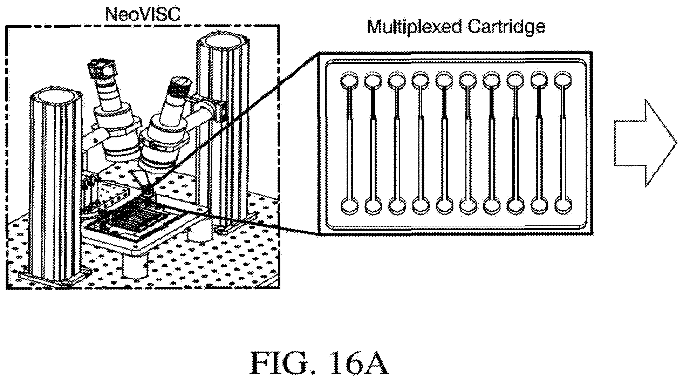

An illustrative general method is described above with respect to **FIGS. 3A-3D,** and as described with respect to the exemplary method illustrated in **FIGS. 16A-16B** and in more detail below, including the Examples below. In illustrative embodiments, one or more cartridges are loaded onto a microfluidic viscometer either before or after performing a fluid loading step of a method provided herein, and typically before applying a pressure to a microfluidic circuit (e.g., within a cartridge), and is removed from the viscometer assembly after the method is performed. The cartridge, for example, can rest on, and is more typically secured on a platform on a viscometer instrument or apparatus as part of a viscometer assembly, for example on a heat spreader plate of a temperature control unit. A skilled artisan will recognize that there are many structures and methods known in the art to secure a cartridge to an instrument. For example, screws can be used to screw a cartridge into a securing structure connected to a heat spreading plate or other platform on the viscometer. In illustrative embodiments, the cartridge snaps into a cartridge securing mechanism of a viscometer and can be released from the securing mechanism, such as by pressing a lever using for example, a spring loaded mechanism. In illustrative embodiments, the cartridges are disposable and can be disposed of after use, thereby eliminating the need for cleaning procedures. Thus a method herein can included, disposing of the microfluidic cartridge and providing another disposable microfluidic cartridge and repeating the method.

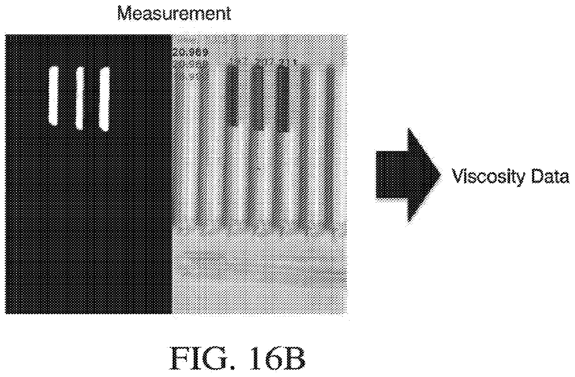

**FIGS. 16A-16B** provides an exemplary microfluidic viscometer (**FIG. 16A**) and an image captured from a cartridge while performing a method using the microfluidic viscometers described herein, such as that exemplified in **FIG. 16A.** The exemplary microfluidic viscometer assembly of **FIG. 16A** includes an image recording and processing system, a pressure control unit, a temperature control unit, and a cartridge comprising multiple microfluidic circuits (i.e., a multiplexed cartridge) (see also the exemplary cartridge illustrated in **FIG. 4**). To generate data ("Viscosity Data" shown in detail in NeoVisc data in **FIG. 17B**), test fluids were introduced into some or all of the microfluidic circuits of the cartridge, processed at user-selected pressures and/or temperatures, and images of the fluid-air interface captured ("Measurement" **FIG. 16B**) and processed as the fluid traversed the optically clear sections of the microfluidic channels of the microfluidic circuits. As shown in the "Measurement" panel (**FIG. 16B**), at time 13.3 seconds after the fluid was loaded into the microfluidic circuits, the test fluids traversed the microfluidic channel (i.e., the optically clear section or subsection thereof) to point 197, 207, and 211, respectively, showing, e.g., that the three test fluids exhibit different velocities through the microfluidic circuits. The "Measurement" images were then processed into data and presented in a usable format ("Viscosity Data", shown in detail in NeoVisc data in FIG. 17B). More details regarding this example is provided in the Examples section below.

In some embodiments, a small volume of a fluid sample is initially loaded into a cartridge containing a microfluidic channel. The volume of fluid sample loaded can be 1-100ul, 2.5-50ul, 5-50ul, 5-25ul, 5-10ul, 10-50ul, or 10-25ul. Depending on the conditions of the particular method being carried out (e.g., imposed pressure drop and fluid viscosity), two to seven seconds can be provided for the fluid to propagate into the horizontal portion of the capillary and image capture is initiated about five seconds after that point (e.g., about 10 seconds of start-up time is allowed before the velocity calculations are initiated). As discussed above, the user can pre-select a temperature and pressure ramp under which the analysis can proceed. As discussed above and shown in, e.g., illustrative **FIGS. 1, 5** and **6,** the imaging device is typically positioned above an optically clear section of the microfluidic channel of lower resistance (e.g., the large section (2) of the microfluidic circuit illustrated in **FIG. 2A,** second large channel section (2B-2) of the microfluidic circuit illustrated in **FIG. 2B**; large section (2) of the microfluidic circuit illustrated in **FIGS. 3A-3B**, second channel section **2** of the microfluidic circuit illustrated in **FIG. 3C;** and the second large channel section (2B-2) of the microfluidic circuit illustrated in **FIG. 3D** (**2A**)). Two or more images of the fluid-air interface present between the fluid and the air in the microfluidic channel (i.e., the lower resistance section thereof) are then captured by the image recording device (e.g., camera), and those images processed by the image processor to determine the viscosity and shear rate of the fluid (this determination being dependent on the pressure, the dimensions of the microfluidic channels, and velocity of the fluid, as described in more detail below), along with other properties if desired.

The position of the fluid in the microfluidic channel is tracked by the image recording and processing system positioned above the cartridge, which records (e.g,. video) of fluid movement through the channel. The image recording and processing system detects the fluid-air interface and can apply a Hough transform to the edge of the fluid-air interface to determine the distance the interface has moved over time (i.e., the velocity of the fluid). An imaging algorithm incorporated into the image recording and processing system software can extract two or more images from the video, applies contrast, detect the fluid-air interface, and measure velocity. From the velocity profile, the software automatically calculates shear stress, apparent shear rate, apparent viscosity, true shear rate, and true viscosity. For accurate velocity measurement, the fluid must move approximately 100 pixels, so the true minimum distance is dependent on individual recording device (e.g., camera) specifications. Thus, fluid velocity in the channel can be extrapolated from images (e.g., recorded video data). In some embodiments, two or more images are extracted at known time points, and the distance traveled by the fluid over a set time frame is measured. With a known applied pressure, channel geometry, and fluid velocity, this technology can measure the viscosity of both Newtonian and non-Newtonian fluids. In some embodiments, one or more flowmeters could also or alternatively be used to take measurements downstream of the outlet (e.g., not in the cartridge).

In some embodiments, a fluid sample can be loaded into the part labelled in most embodiments as the outlet (e.g., part **4** in **FIGS. 2-4**), moved into the microfluidic channel of the microfluidic circuit using constant pressure, through a lower-resistance large section (e.g., part **2** in **FIG. 2A** or 2B2 in **FIG. 2B**) and then into a higher-resistance small section (e.g., part **1** in **FIGS. 2A** and **2B),** and tracked / imaged in a large channel (e.g. part **2** in **FIG. 2A, 2B-1** or **2B-2** in **FIG. 2B**) by identifying the 'trailing' fluid-air interface in the large channel typically after the small channel is filled with fluid, to measure viscosity as described above with respect to the tracking of the leading fluid-air interface.

The viscosity and shear rate for Newtonian and non-Newtonian fluids can be computed by the image data processor, also referred to herein as an image analysis processor, which can be part of the image analysis function, from the data captured (e.g., the velocity by which the fluid traversed the microfluidic channel) using the following non-limiting algorithms described here, among others. Such equations can be used for example, in embodiments, when the higher-resistance section of the microfluidic channel provides at least 80%, and in illustrative embodiments at least 85%, 90%, 95%, 98%, or 99% (preferably at least any of 80%, 85%, 90%, or 95%) of the resistance of the combined resistance of all of the microfluidic channels in a microfluidic circuit of any of the architectures provided herein.

Fluid viscosity of a Newtonian fluid is given by the following equation:

$$\mu = \frac{\Delta P + P_L}{QS} \qquad (1)$$

where $\Delta P$ is the pressure drop applied by the pressure controller, $P_L$ is the Laplace pressure due to the surface tension at the fluid-air interface, Q is the flow rate of the fluid in the channel, and S is the geometric factor of the small channel, which is expressed as

$$S = \frac{12L}{h^3 w} \qquad (2)$$

where L is the length of the small microchannel, h is the height of the small microchannel, and w is the width of the small microchannel. This equation for the geometric factor of a rectangular channel only applies if h«w, as is the case for the small microchannel. The geometric factor for the large channel is negligible compared to that of the small channel, so the total geometric factor for the system can be expressed by the equation above.

The flow rate is calculated as shown below:

$$Q = vA \qquad (3)$$

where v is the velocity of the fluid traveling through the large channel, and A is the cross-sectional area of the large channel. As described previously, capillary pressure is present when one fluid-air interface exists. For a rectangular channel, capillary pressure is calculated as

$$P_L = -\sigma \left[ \frac{cos\theta_{top} + cos\theta_{bottom}}{h} + \frac{cos\theta_{left} + cos\theta_{right}}{w} \right] \qquad (4)$$

where $\sigma$ refers to the surface tension of the fluid, $cos\theta_{top}$ refers to the contact angle of the fluid on the top surface of the channel, $cos\theta_{bottom}$ refers to the contact angle of the fluid on the bottom surface, $cos\theta_{left}$ refers to the contact angle of the fluid on the left wall, and $cos\theta_{right}$ refers to the contact angle of the fluid on the right wall. With this equation, a positive capillary pressure corresponds to fluid resisting movement through the channel, and a negative capillary pressure corresponds to fluid being pulled through the channel. At higher driving pressures, capillary pressure is considered negligible, however if the capillary pressure accounts for more than 20, 15, 10, 9, 8, 7, 6 or preferably about 5, or 5% of the driving pressure, then it should be accounted for.

When h«w (h being the height of the small microchannel, and w being the width of the small microchannel), as is the case in the exemplary cartridges described here in (e.g., Cartridge 1 and Cartridge 2), the shear rate of a Newtonian fluid through the channel is given by:

$$\dot{\gamma}_0 = \frac{6Q}{wh^2} \qquad (5)$$

However, for a non-Newtonian fluid, which experiences a variable flow profile through the channel, the true shear rate can be expressed as

$$\dot{\gamma} = \frac{\dot{\gamma}_0}{3} \left( 2 + \frac{d(\ln \dot{\gamma}_0)}{d(\ln \tau_w)} \right) \qquad (6)$$

where the apparent shear rate is multiplied by the Weissenberg-Rabinowitch correction factor. In Equation (6), $\tau_w$ is

dependent on pressure drop and the geometry of the small channel:

$$\tau_w = \frac{wh(\Delta P + P_L)}{2L(w+h)} \ (7)$$

Thus, for a non-Newtonian fluid, the viscosity is equal to

$$\mu = \frac{\tau_w}{\dot{\gamma}} \ (8)$$

To determine the true shear rate for a non-Newtonian fluid using Equation (6), the term $d(\ln \dot{\gamma}_0)/d(\ln \tau_w)$ must first be approximated by plotting apparent shear rate versus shear stress for a range of pressure drops, fitting an appropriate polynomial to the points, and differentiating. Then, the true shear rate, and subsequently the viscosity, can be found for each pressure drop.

The K value can also be calculated (as in the Examples), and represents the geometric factor of the channel, and the expression to find K is $[(\Delta P + P_L)/\mu/Q]$. Calculating the K value is an indirect method of measuring the geometric factor S described in the patent draft. One can determine K by running fluids of known viscosity through the channel at a known pressure and measuring flow rate.

A more general formula can be utilized for microfluidic channels of shapes other than rectangular / trapezoidal: $P_L$ = $2\gamma\cos\theta/r$, where r is the radius for a circular channel, or the effective radius for a channel with a different cross-sectional shape.

As shown in the Examples, these microfluidic viscometers have been used to determine the fluid flow rate of glycerol-based, polyethylene oxide (PEO)-based, and protein-containing (e.g., BSA, monoclonal antibodies) test samples. To do so, 5-10 $\mu$L of sample fluid was added to the inlet of the microfluidic circuit, and driven through the microfluidic channel by a constant pressure (the source of pressure being, e.g., a hydrostatic head or OB1 MK3 microfluidic flow control system). As the fluid flowed through the microfluidic circuit, a video capture device was utilized to capture fluid velocity within the microfluidic channel. The collected video was then postprocessed in an image processing device (ImageJ) to determine the fluid flow rate traveling through the microfluidic circuit, and subsequently the fluid viscosity. Each fluid sample run was concurrently measured using a Brookfield AMETEK DV2T Viscometer, and found to accurately correspond to the results with that machine. A number of functions discussed herein can be implemented on a computing device by software, firmware, hardware, or a combination thereof as part of a computer system. All or part of the computing device and other components of the computer system can be, but are not required to be, physically associated with other components of a viscometer provided herein. The computer system can be a physically separate computer system from the viscometer, for example a personal computer or a terminal for accessing the Internet. These functions can be implemented as computer-readable code on a single computer system, or on multiple computer systems, which can perform and process various tasks. These functions can include, for example, video and/or image capture, storage and loading, as well as identifying, enhancing, and measuring objects in a video and/or an image, such as a fluid-air interface in a channel, and other processing functions of the image data processor, also referred to herein as an image analysis processor. Furthermore, the functions can include data analysis functions for determining velocity of a fluid through a microfluidic channel and/or to determine viscosity from this velocity, by performing the mathematical equations provided herein on data captured from the capture images. Plots can be generated by a computing device associated with a viscometer, such as those plotting viscosity over a time or temperature range. In addition, the functions can include functions to provide a graphical user interface to communicate with a user and allow user input, and for processing date input thru the graphical user interface for example to provide control, including automatic control, of various parts of the viscometer, such as a pressure control unit and/or a temperature control unit.

A user can input an identifying characteristic of a cartridge provided herein, such as a lot number or catalog number. In certain embodiments, a device associated with a viscometer provided herein, can read a barcode or RFID or other identifying object associated with a cartridge that is loaded onto a viscometer provided herein. This information can then be input into a computing device associated with the viscometer and used to capture information about the cartridge for example from a storage device associated with an Internet server, such as the number of microfluidic circuits on the cartridge and/or whether the cartridge has already been used to perform a method and/or which circuits on a cartridge have not been used to perform a method. Furthermore, an interface can allow a user to enter information about a sample loaded into a cartridge and/or other information such as date or lot number of a fluid being tested.

Processing tasks can be carried out by one or more processors. However, it should be noted that various types of processing technology may be used here, including programmable logic arrays (PLAs), application-specific integrated circuits (ASICs), multi-core processors, multiple processors, or distributed processors. Additional specialized processing resources such as graphics, multimedia, or mathematical processing capabilities may also be used to aid in certain processing tasks. These processing resources may be hardware, software, or an appropriate combination thereof. For example, one or more of processors may be a graphics-processing unit (GPU).

Computer system also includes a main memory and may also include a secondary memory. Main memory may be a volatile memory or non-volatile memory and divided into channels. Memory may be associated with an internet server and said computer system could include a computer terminal connected over a local or wide area network such as the Internet, to a server. Secondary memory may include, for example, non-volatile memory such as a hard disk drive, a removable storage drive, and/or a memory stick. Removable storage drive may comprise a floppy disk drive, a magnetic tape drive, an optical disk drive, a flash memory, or the like. The removable storage drive reads from and/or writes to a removable storage unit in a well-known manner. Removable storage unit may comprise a floppy disk, magnetic tape, optical disk, etc. which is read by and written to by removable storage drive. As will be appreciated by persons skilled in the relevant art(s), removable storage unit includes a computer usable storage medium having stored therein computer software and/or data.

Computer system may also include a communications and network interface. Communication and network interface allows software and data to be transferred between computer system and external devices and/or between a computer system physically associated with a viscometer and a computer system not associate with the viscometer, such as an Internet server. Communications and network interface may include a modem, a communications port, a PCMCIA slot and card, or the like. Software and data transferred via communications and network interface are in the form of signals which may be electronic, electromagnetic, optical, or other signals capable of being received by communication and network interface. These signals are provided to communication and network interface via a communication path. Communication path carries signals and may be implemented using wire or cable, fiber optics, a phone line, a cellular phone link, blue tooth, WI-FI, an RF link or other communications channels.

A communication and network interface can be associated with the computer system and allows a computer system associated with the viscometer to communicate over communication networks or mediums such as LANs, WANs the Internet, etc. The communication and network interface may interface with remote sites or networks via wired or wireless connections.

Instructions for performing functions discussed herein for operating a viscometer and determining viscosity, can be encoded as computer-readable code on a computer program medium. In this document, the terms "computer program medium," "computer-usable medium" and "non-transitory medium" are used to generally refer to tangible media such as removable storage unit, removable storage drive, and a hard disk installed in hard disk drive, including a hard drive connected to a server. Signals carried over communication path can also embody the logic described herein. Computer program medium and computer usable medium can also refer to memories, such as main memory and secondary memory, which can be memory semiconductors (e.g. DRAMs, etc.). These computer program products are means for providing software to the computer system.

Computer programs (also called computer control logic) are stored in main memory and/or secondary memory. Computer programs may also be received via communication and network interface. Such computer programs, when executed, enable the computer system to implement viscometer control and viscosity determination functions as discussed herein. In particular, the computer programs, when executed, enable processor to implement the disclosed processes. Accordingly, such computer programs represent controllers of the computer system. Where the embodiments are implemented using software, the software may be stored in a computer program product and loaded into computer system using removable storage drive, interfaces, hard drive or communication and network interface, for example.

The computer system may also include input/output/display device, such as keyboards, monitors, pointing devices, touchscreens, etc. Such input/output/display device can be physically associated with a viscometer disclosed herein, or can be physically separate.

The embodiments are also directed to computer program products comprising software stored on any computer-usable medium. Such software, when executed in one or more data processing devices, causes a data processing device(s) to operate as described herein. Embodiments employ any computer-usable or -readable medium, and any computer-usable or -readable storage medium known now or in the future. Examples of computer-usable or computer-readable mediums include, but are not limited to, primary storage devices (e.g., any type of random access memory), secondary storage devices (e.g., hard drives, floppy disks, CD ROMS, ZIP disks, tapes, magnetic storage devices, optical storage devices, MEMS, nano-technological storage devices, etc.), and communication mediums (e.g., wired and wireless communications networks, local area networks, wide area networks, intranets, etc.). Computer-usable or computer-readable mediums can include any form of transitory (which include signals) or non-transitory media (which exclude signals). Non-transitory media comprise, by way of non-limiting example, the aforementioned physical storage devices (e.g., primary and secondary storage devices).

In some aspects, a microfluidic viscometer assembly provided herein can be used to determine the viscoelasticity of a fluid. Most fluids display both viscous and elastic properties. By creating an oscillatory fluid flow, one can determine the elastic modulus (G') and the loss modulus (G") to assess the viscoelasticity of the fluid. Conventionally, this is done in a rotational rheometer, where a test is performed in the form of a sine curve, with the fluid being sheared back and forth, and the phase shift between the preset sine curve and the response sine curve (the fluid motion) is found. In one aspect, provided herein is a method for using a microfluidic viscometer assembly provided here, to produce oscillatory flow by applying an oscillating field to the fluid in the channels and tracking the movement of the interface in the large channel. In illustrative embodiments, such a method is performed in Cartridge 2 disclosed herein (e.g., as illustrated in **FIGS. 2B** and **3D**), wherein a fluid-air interface is created in the second channel section, wherein the second channel section comprises the at least a partially optically clear channel subsection. In illustrative embodiments of this aspect, fluid is input into the microfluidic cartridge until it fills a portion of a second channel section and a third channel section, thus creating a fluid-air interface in both the second channel section and the third channel section, and the fluid can move back and forth freely. In this illustrative embodiment of this aspect for determining viscoelasticity, the first channel section is positioned between the second and third channel sections and provides a resistance that is at least 80% and less than 100% of the combined resistance encountered by the fluid as it is moved back and forth within the channel.

In this aspect for determining a viscoelasticity, after the fluid is introduced into the microfluidic channel via the first inlet, a positive pressure followed by a negative pressure is applied to the inlet to produce a pressure profile in the shape of a sine wave to the microfluidic channel, thereby producing an oscillatory flow within the second channel section thereof. The pressure control unit herein can be controlled and programmed using a computer interface as provided herein, to perform this positive and negative pressure cycling. Then movement of the fluid within the second channel section of the microfluidic channel is observed, visualized, recorded, and/or tracked to generate a response sine curve. This function is typically carried out by the image recording system provided herein. Viscoelasticity of the first fluid can then be determined (typically calculated and/or measured) by comparing the response sine curve to the pressure profile. Mathematical equations and analysis for performing such comparison can be performed using methods and equations known in the art for viscoelasticity determinations. One or more computer systems that are physically connected to, or separate from, a microfluidic viscometer provide herein, can be programmed to accept user input to request a viscoelasticity determination, to control the pressure unit to create the pressure profile in the shape of a sine wave, and to analyze images and/or video captured by the image recording system and to analyze and compare data. Thus, the one or more computer systems in such embodiments are digitally connected to a user interface, the pressure control unit, and the image recording system to perform these functions. As will be understood, virtually any of the embodiments of the microfluidic viscometer assembly provided herein for viscosity determination can be used for and/or applied to viscoelasticity determination.

Accordingly, provided herein in one aspect is a method for determining the viscoelasticity of a fluid, that includes: a) introducing a first fluid into a first inlet to load the fluid into a first channel section, second channel section, and third channel section of a first microfluidic channel to create a first fluid-air interface in the second channel section, wherein in illustrative embodiments, the first microfluidic channel is part of a first microfluidic circuit of a microfluidic cartridge comprising at least two microfluidic circuits, each microfluidic circuit comprising: i) an inlet; ii) an outlet; iii) at least one microfluidic channel comprising at least a first, second and third channel section, wherein: the first channel section is positioned between the second and third channel sections; the second channel section at opposite ends is in direct fluidic communication with the first channel section and the outlet, and comprises an optically clear channel subsection, or is completely optically clear; the third channel section at opposite ends is in direct fluidic communication with the first channel section and the inlet and optionally comprises an optically clear channel subsection, or is completely optically clear; and, the first channel section provides a resistance that is at least 80% and less than 100% of the combined resistance encountered by a fluid traversing the first and second channel sections, or of the microfluidic circuit; b) applying a positive pressure followed by a negative pressure to the first inlet to produce a pressure profile in the shape of a sine wave to the first microfluidic channel, thereby producing an oscillatory flow within the second channel section thereof; c) tracking movement of the fluid within the second channel section of the first microfluidic channel to generate a response sine curve; and, d) determining the viscoelasticity of the first fluid by comparing the response sine curve to the pressure profile. In some embodiments, there is a fluid-air interface in both the second channel section and third channel section, and the response curve could be found by imaging either interface.

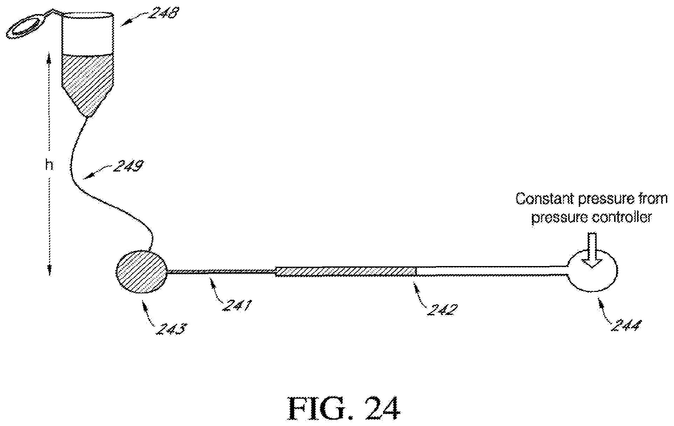

In some aspects, a microfluidic viscometer assembly provided herein can be used to determine the density of a fluid. Such an application for density determination is illustrated in **FIG. 24.** For this application, hydrostatic pressure can be applied at the inlet **(243)** by adding sample fluid to a sample reservoir **(248)** positioned some distance above the microfluidic circuit **(245)** that connects to the inlet of a microfluidic circuit (e.g., comprising a microfluidic channel having a higher-resistance first channel section **(241)** and a lower-resistance second channel section **(242)** (e.g., as illustrated and described with respect to the microfluidic channel in **FIG. 2A)** and an outlet **(244))** via a fluidic connection **(249)** (e.g., tubing) **(FIG. 24).** Thus, in certain embodiments, a microfluidic viscometer herein further comprises a sample reservoir and a reservoir fluidic connection that can be repositioned after loading of a cartridge, to be in direct fluidic communication with one or more inlets of the microfluidic circuits of a cartridge. In these embodiments, instead of a user directly loading a fluid into a channel via an inlet, the user can load a fluid sample into the reservoir. A reservoir can be used to load a fluid into a microfluidic circuit for a viscosity determination and/or for a density determination, and the amount of fluid sample loaded into the unit will be controlled by the user via a user interface connected to computer system that controls the volume of fluid delivered into each microfluidic circuit. In illustrative embodiments, more fluid can be loaded into the microfluidic circuit for a density determination than a viscosity determination. A repositioning of a reservoir fluidic connection can occur in response to an input from a user interface connected to a computer system digitally connected to a repositioning assembly. Thus, if a user uses the user interface to request a density determination of a fluid, the computer system directs the repositioning assembly to connect the reservoir fluidic connection to the input of one or more microfluidic circuits of a microfluidic cartridge.

This hydrostatic pressure ($\Delta P$) generated from the flow of fluid from the reservoir into the microfluidic circuit is equal to the density of the sample fluid ($\rho$) multiplied by the acceleration due to gravity (g) and the vertical distance between the top of the sample fluid in the reservoir and the cartridge (h): $\Delta P = \rho g h$. Thus, the hydrostatic pressure is unknown, because density is unknown. At the same time, a pressure controller will apply a constant pressure at the outlet **(244).** When the pressure from the controller equals the hydrostatic pressure, the fluid will remain stationary. Therefore, the image recording system (e.g. camera) can track the movement of the interface, and the pressure applied at the outlet can be adjusted until fluid movement stops. At this point, the hydrostatic pressure will be known and the density can be determined (back-calculated). A computer system can be connected to and can control the various functional units of a microfluidic viscometer herein to perform such a method of density determination.

Accordingly, provided herein in one embodiment is a method for determining the density of a fluid, the method comprising: a) introducing the fluid into a first sample reservoir to load the fluid sample into a first inlet via a fluidic connection connecting the first sample reservoir to the first inlet, thereby loading the fluid into a first channel section of a first microfluidic circuit of a microfluidic cartridge comprising at least two microfluidic circuits, each microfluidic circuit comprising: i) an inlet; ii) at least one microfluidic channel comprising: a first channel section having a first diameter and an end in direct fluidic communication with the inlet, a second channel section having an optically clear channel subsection, or being completely optically clear, and having a second diameter greater than the first diameter, wherein the second channel section is in direct fluidic communication with the first channel section at an end opposite the inlet, and an outlet in fluid communication with the second channel section at an end opposite the first channel section, wherein the first channel section provides a resistance to a fluid traversing said microfluidic channel that is at least 80% and less than 100% of a combined resistance of the first and second channel sections, and/or of the microfluidic circuits; b) continuing to load the fluid from the sample reservoir into the microfluidic circuit to move the fluid from said first channel section of the first microfluidic circuit to the second channel section; c) applying a constant pressure to the second channel section through the output; d) determining the velocity at which said fluid is moving through said second channel section of the first microfluidic circuit; and, e) using the velocity to determine the density of the fluid. In another embodiment is a method for determining the density of a fluid, the method comprising: a) introducing the fluid into a first sample reservoir to load the fluid sample into a first inlet via a fluidic connection connecting the first sample reservoir to the first inlet, thereby loading the fluid into a first channel section of a first microfluidic circuit of a microfluidic cartridge comprising at least two microfluidic circuits, each microfluidic circuit comprising: i) an inlet; ii) at least one microfluidic channel comprising at least a first, second and third channel section, wherein: the first channel section is positioned between the second and third channel sections; the second channel section is in direct fluidic communication with the first channel section and the outlet, and includes an optically clear channel subsection, or is completely optically clear; the third channel section is in direct fluidic communication with the first channel section and the inlet, wherein the first channel section provides a resistance to a fluid traversing said microfluidic channel that is at least 80% and less than 100% of a combined resistance of the first and second channel sections, and/or of the microfluidic circuits; b) continuing to load the fluid from the sample reservoir into the microfluidic circuit to move the fluid from said first channel section of the first microfluidic circuit to the second channel section; c) applying a constant pressure to the second channel section through the output; d) determining the velocity at which said fluid is moving through said second channel section of the first microfluidic circuit; and, e) using the velocity to determine the density of the fluid. In illustrative embodiments, the velocity determination is used to determine when the fluid stops moving, and the density of the fluid is determined by measuring the pressure when the fluid stops moving.

While the microfluidic viscometers disclosed herein may be used to determine viscosity and/or density of a fluid, these may also be used to measure hydrodynamic radius, intrinsic viscosity, extensional viscosity (e.g., uniaxial), to produce a protein denaturation curve, to determine protein conformation, to conduct an injectability determination, molecular weight determination, conduct a shear rate and/or temperature sweep, and/or conduct stability and/or quality, or quality control tests. For instance, the hydrodynamic radius of a protein can be found from the Einstein viscosity relation $[\eta] = 2.5 N V_e/M$, where $[\eta]$ is the intrinsic viscosity, N is Avogadro's number, $V_e$ is the effective volume of one protein molecule modeled as a sphere, and M is the molecular weight of the protein. If the intrinsic viscosity and molecular weight of the protein are known, the effective volume can be determined, and the hydrodynamic radius can be found using the volume equation for a sphere. (Armstrong JK, Wenby RB, Meiselman HJ, Fisher TC. The hydrodynamic radii of macromolecules and their effect on red blood cell aggregation. Biophys J. 2004;87(6):4259-70.) The intrinsic viscosity can be found by first finding the specific viscosity ($\eta_{sp}$), which is equal to ($\eta - \eta_0)/\eta_0$, where $\eta$ is the viscosity of the solution, and $\eta_0$ is the viscosity of the solvent. A solution's intrinsic viscosity can be found by plotting the specific viscosity divided by the concentration of the solution at several concentrations and extrapolating the viscosity at a concentration of zero. (Armstrong JK, Wenby RB, Meiselman HJ, Fisher TC. The hydrodynamic radii of macromolecules and their effect on red blood cell aggregation. Biophys J. 2004;87(6):4259-70.) Uniaxial extensional viscosity of a Newtonian fluid is equal to three times the shear viscosity, and thus can be found by measuring the viscosity of a fluid sample and multiplying the value by three. A protein denaturation curve can be produced by measuring viscosity across a range of temperatures and determining a temperature at which there is a clear change in the viscosity curve. Protein conformation can be determined from the Mark-Houwink equation above, by finding the value for the constant 'a' from intrinsic viscosity and molecular weight. For compact, sphere-shaped molecules a =0, for random coiled molecules, a is between 0.5 and 0.8, and for rod-shaped molecules a =1.8. (Sousa, Isabel & Mitchell, John & Hill, Sandra & Harding, Stephen. (1995). Intrinsic viscosity and Mark-Houwink parameter of lupin proteins in aqueous solutions. Les Cahiers de rheologie. 14. 139-148.) Information on injectability can be determined by measuring the viscosity of injectable solutions at relevant shear rates to determine if appropriate concentrations of active solution can be safely delivered into the body. The molecular weight of a protein can be determined from its intrinsic viscosity by employing the Mark-Houwink equation $[\eta] = KM^a$ where K and a are constants that depend on the specific protein and solvent. (Sousa, Isabel & Mitchell, John & Hill, Sandra & Harding, Stephen. (1995). Intrinsic viscosity and Mark-Houwink parameter of lupin proteins in aqueous solutions. Les Cahiers de rheologie. 14. 139-148.) To conduct a shear rate and/or temperature sweep, the viscosity of a fluid sample can be measured across a range of temperatures or pressures to understand how the fluid is affected. The stability and/or quality of a fluid can be evaluated by determining whether the protein denatures at certain relevant temperatures and by measuring the viscosity at various time points to understand how the protein solution behaves over time. Other techniques may also be suitable as may be determined by those of ordinary skill in the art.

Exemplary fluids that can be tested using the microfluidic viscometers disclosed herein can include but are not limited to protein solutions, biological samples (e.g., blood, synovial fluid, saliva, vitreous humor), foods (e.g., ketchup, mustard), cosmetics (e.g., creams such as shaving cream, lotions), pharmaceutical formulations, paints (e.g., colloidal suspensions admixed with polymers), inks, oils (e.g., engine oil), thickeners, petroleum products. It is understood in the art that each of these types of fluids exhibit different shear rates (e.g., $10^{-6}$ to $10^7$ 1/s) and viscosities of, e.g., from about $10^{-4}$ to $10^8$ Pa.s (e.g., most biological fluids being between $10^{-4}$ to $10^3$ (see, e.g., Gupta, Biomicrofluids 10, 043402 (2016)). In general, the microfluidic viscometers disclosed herein can be used to study Newtonian and non-Newtonian viscous and/or viscoelastic fluids having shear rates of from about 1 to about 500,000 1/s and/or viscosities of from about 0.1 to about 50,000 Pascals (Pas).

In some embodiments, then, this disclosure provides a microfluidic viscometer assembly, the assembly comprising: a) a microfluidic cartridge comprising at least two microfluidic circuits, each microfluidic circuit comprising: i) an inlet; ii) at least one microfluidic channel comprising: a first channel section having a first diameter and an end in direct fluidic communication with the inlet, and, a second channel section having an optically clear channel subsection, or being completely optically clear, and having a second diameter greater than the first diameter, wherein the second section is in direct fluidic communication with the first section at an end opposite the inlet; and, iii) an outlet in fluid communication with the second channel section at an end opposite the first channel section, wherein the first channel section provides a resistance to a fluid traversing said microfluidic channel that is at least 80% and less than 100% of a combined resistance of the first and second channel sections, and/or of the microfluidic circuits; b) an image recording system optically connected to the optically clear channel section of the at least two microfluidic circuits; and, c) a pressure control unit. And in some embodiments, this disclosure provides a microfluidic viscometer assembly, the assembly comprising: a) a microfluidic cartridge comprising at least two microfluidic circuits, each microfluidic circuit comprising a microfluidic channel comprising: i) an inlet; ii) an outlet; iii) at least one microfluidic channel comprising at least a first, second and third channel section, wherein the first channel section is positioned between the second and third channel sections; the second channel section is in direct fluidic communication with the first channel section and the outlet, and includes an optically clear channel subsection, or is completely optically clear; the third channel section is in direct fluidic communication with the inlet; and, the first channel section provides a resistance that is at least 80% and less than 100% of the combined resistance encountered by a fluid traversing the first and second channel sections, or of the microfluidic circuits; and, an outlet in fluid communication with the second channel section at an end opposite the first channel section, wherein the first channel section provides a resistance that is at least 80% and less than 100% of a combined resistance of the first channel section and the second channel section; b) an image recording system optically connected to the optically clear channel section of the at least two microfluidic circuits; and, c) a pressure control unit.

Within this disclosure, the first channel section is considered the higher-resistance section and the second channel section is considered to be a lower-resistance section. As explained above, the widths and/or heights are important to the function of each as a high-resistance or low-resistance section. For instance, as indicated above and shown in the Examples below, the h/w ratio for the high-resistance section can be under 0.1, such as about 0.06. In some embodiments, the first channel section provides at least 90% and less than 100%, optionally wherein the first section provides at least 95% and less than 100% of the combined resistance of the first and second channel sections, and/or of the entire microfluidic circuit, for a fluid traversing the microfluidic circuit. In some embodiments, the first and second channel sections are directly fluidly connected without any intervening sections and/or parts. In some embodiments, the first and second channel sections form a straight fluidic flow path without a bend. In some embodiments, the microfluidic viscometer assembly does not comprise a glass capillary in fluid communication with the microfluidic circuits and/or microfluidic channels. It is also noted that, in some embodiments, a fluid may enter or exit the microfluidic circuit by either the inlet or the outlet (e.g., as in the "reverse" method described above).

In some embodiments, the microfluidic viscometer assembly can include a light source, optionally a diffuse light source, optically connected to the optically clear sections of the microfluidic channel. In some embodiments, a single image recording system is positioned above all the microfluidic circuits, or a separate image recording system is positioned above each microfluidic circuit, which can also be referred to as a microfluidic channel circuit. In some embodiments, the microfluidic viscometer assembly further includes an image analysis function comprising an image analysis processor comprising instructions to determine velocity of a fluid through each of the microfluidic circuits and to use said velocity to determine a viscosity of the fluid, optionally wherein the image analysis function is a computer program stored on a memory of a computer that is not physically associated with, or connect to the image recording system, or optionally any other physical component of the microfluidic viscometer assembly. In some embodiments, the image analysis function is an automatic function because it is preprogrammed to run the program without further user intervention. In some embodiments, the image analysis function further comprises instructions to calculate shear stress, apparent shear rate, apparent viscosity, true shear rate, and/or true viscosity of said fluid of a fluid in each of the microfluidic circuits.

In some embodiments, each microfluidic cartridge can include four to 36 of said microfluidic circuits, and optionally comprises 10 or 12 microfluidic circuits. In some embodiments, the microfluidic cartridge is a disposable microfluidic cartridge, removably connected to a microfluidic instrument comprising the image recording system and pressure control unit. In some embodiments, the microfluidic circuits of the microfluidic cartridge are formed in plastic that may be non-deformable. In some embodiments, the walls of the first channel section and the second channel section are non-deformable, and have the same or different composition.

In some embodiments, this disclosure provides methods for determining the viscosity of a fluid using a microfluidic viscometer assembly disclosed herein, the method including determining the velocity at which said fluid is moving through said microchannel. In some embodiments, such methods include:

a) introducing a fluid into the microfluidic channel; b) capturing at least two images of a fluid-air interface between said fluid and air within the optically clear channel section of said microfluidic channel; c) comparing the at least two images to determine the position of said fluid-air interface in each image; and,

d) determining the velocity at which said fluid is moving through said microchannel using the position of said fluid-air interface in each image; and optionally further calculating the shear stress, apparent shear rate, apparent viscosity, true shear rate, and/or true viscosity of said fluid.

In some embodiments, the methods include: introducing a first fluid into a first inlet to load the fluid into a first channel section of a first microfluidic circuit of a microfluidic cartridge comprising at least two microfluidic circuits, each microfluidic circuit comprising: i) an inlet; ii) at least one microfluidic channel comprising a first channel section having a first diameter and an end in direct fluidic communication with the inlet, and a second channel section having an optically clear channel subsection, or being completely optically clear, and having a second diameter greater than the first diameter, wherein the second channel section is in direct fluidic communication with the first channel section at an end opposite the inlet; and, iii) an outlet in fluid communication with the second channel section at an end opposite the first channel section; wherein the first channel section provides a resistance to a fluid traversing said microfluidic channel that is at least 80% and less than 100% of a combined resistance of the first and second channel sections, and/or of the microfluidic circuits; applying a constant pressure to said first channel of the first channel circuit to move the fluid from the first channel section to the second channel section of the microfluidic circuit; determining the velocity at which said fluid is moving through said second channel section; and, using the velocity to determine the viscosity of the first fluid.

In some embodiments, such methods include: a) introducing a first fluid into a first inlet to load the fluid into a first channel section of a first microfluidic circuit of a microfluidic cartridge comprising at least two microfluidic circuits, each microfluidic circuit comprising: i) an inlet; ii) an outlet; iii) at least one microfluidic channel comprising at least a first, second and third channel section, wherein: the first channel section is positioned between the second and third channel sections; the second channel section is in direct fluidic communication with the first channel section and the outlet, and includes an optically clear channel subsection, or is completely optically clear; the third channel section is in direct fluidic communication with the inlet; and, the first channel section provides a resistance that is at least 80% and less than 100% of the combined resistance encountered by a fluid traversing the first and second channel sections, or of the microfluidic circuits; and, the outlet is in fluid communication with the second channel section at an end of the microfluidic circuit opposite the first channel section, and wherein the first channel section provides a resistance that is at least 80% and less than 100% of a combined resistance of the first channel section and the second channel section; b) applying a constant pressure to said first channel of the first channel circuit to move the fluid from the first channel section to the second channel section of the first channel circuit; c) determining the velocity at which said fluid is moving through the second channel section; and, using the velocity to determine the viscosity of the first fluid.

In some embodiments, the method include removably connecting a microfluidic cartridge as disclosed herein to a microfluidic viscometer comprising: a pressure control unit, wherein the pressure control unit applies the constant pressure to said first channel section; and, an image recording system, wherein the image recording system captures images that are used to determine the velocity at which said fluid is moving through said second channel section. In some such embodiments, said microfluidic cartridge comprises microfluidic circuits comprising microfluidic channels including a least one section (e.g., the above-described first channel section) having a height less than 0.1 its width.

In some embodiments, the microfluidic viscometer and methods of use comprise and/or can be used to study Newtonian and/or non-Newtonian fluids. In some embodiments, the fluid is an aqueous fluid, an oil-based fluid is not loaded into a microchannel, and/or an oil-aqueous fluid interface is not formed. In some embodiments, the viscosity of multiple fluid samples of such fluids, the same or different, are determined simultaneously. In some embodiments, a control fluid is not loaded into a microfluidic circuit during the method. In some embodiments, the velocity of a fluid is determined by extracting two or more images recorded by the image recording system, and comparing a fluid-air interface in each of said images. In some embodiments in which the microfluidic viscometer assembly further comprises a diffuse light source, and the method further comprises illuminating the optically clear channel section to enhance detection of the fluid-air interface. In some embodies, the methods include removing the microfluidic cartridge from the instrument after determining the viscosity of a first fluid. In some embodiments, the methods further include removably connecting another microfluidic cartridge to the instrument and repeating the method to determine the viscosity of a second fluid. In some embodiments, the method is first performed to determine the viscosity of at least two different fluids loaded into different microfluidic circuits of the microfluidic cartridge, and then is performed on at least two additional fluids loaded into the other microfluidic cartridge. In some embodiments, in addition to velocity, viscosity is determined using the pressure and dimensions of the first channel section, the second channel section, and optionally the third channel section, of the microfluidic channel.

In some embodiments, this disclosure provides a product(s) comprising at least two microfluidic viscometer microfluidic cartridges, each microfluidic cartridge comprising at least one microfluidic circuit through which said fluid can flow, each microfluidic circuit comprising: an inlet through which said fluid can be loaded into the channel, a first channel section having a first diameter, and second optically clear channel section having a second diameter greater than the first diameter, wherein the walls of the first channel section and the second channel section are comprised of the same or different non-deformable composition and wherein the first channel section provides a resistance that is at least 80% and less than 100% of a combined resistance of the first channel section and the second channel section; and, an outlet through which said fluid can exit the channel. In some embodiments, such product can include at least two microfluidic viscometer microfluidic cartridges, each microfluidic cartridge comprising: at least one microfluidic circuit through which said fluid can flow, each microfluidic circuit comprising an inlet through which said fluid can be loaded into the microfluidic circuit; at least one microfluidic channel comprising a first channel section having a first diameter, a second and/or third channel section having a second diameter greater than the first diameter and optically clear subsection (or is completely optically clear) with diameter(s) greater than the first diameter and optionally the same as one another (i.e., the second and third channel sections have the same diameter), wherein the first channel section provides a resistance that is at least 80% and less than 100% of a combined resistance of the first, second and third channel sections, and wherein the walls of the first, second and third channel sections comprise the same or different non-deformable composition; and, an outlet through which said fluid can exit the channel. In some embodiments, the product further comprises a computer program stored on a computer memory, wherein the computer program comprises instructions for performing an image analysis function to determine velocity of a fluid through each of the microfluidic circuits and to use said velocity to determine a viscosity of the fluid, optionally wherein the image analysis function is a computer program stored on a memory of a remote computer server. In some embodiments, the computer program is accessible over the Internet or stored on a storage device. In some embodiments, the product further comprises instructions for loading the microfluidic viscometer microfluidic cartridges into a microfluidic viscometer. Other embodiments are also contemplated by this disclosure, as may be determined by one of ordinary skill in the art.

The terms "about", "approximately", and the like, when preceding a list of numerical values or range, refer to each individual value in the list or range independently as if each individual value in the list or range was immediately preceded by that term. The terms mean that the values to which the same refer are exactly, close to, or similar thereto.

Optional or optionally means that the subsequently described event or circumstance can or cannot occur, and that the description includes instances where the event or circumstance occurs and instances where it does not. For example, the phrase optionally the composition can comprise a combination means that the composition may comprise a combination of different molecules or may not include a combination such that the description includes both the combination and the absence of the combination (i.e., individual members of the combination).

Ranges may be expressed herein as from about one particular value, and/or to about another particular value. When such a range is expressed, another aspect includes from the one particular value and/or to the other particular value. Similarly, when values are expressed as approximations, by use of the antecedent about or approximately, it will be understood that the particular value forms another aspect. It will be further understood that the endpoints of each of the ranges are significant both in relation to the other endpoint, and independently of the other endpoint. Ranges (e.g., 90-100%) are meant to include the range *per se* as well as each independent value within the range as if each value was individually listed.

All references cited within this disclosure are hereby incorporated by reference in their entirety. Certain embodiments are further described in the following examples. These embodiments are provided as examples only and are not intended to limit the scope of the claims in any way.

## EXAMPLES

The examples demonstrate that the microfluidic viscometers described herein are capable of highly accurate, reproducible, low volume (e.g. 10μL), and multiplexed viscosity measurements of both Newtonian and Non-Newtonian fluids. For instance, glycerol solutions and a model protein solution (BSA) ranging in concentration from 10-300mg/mL, both Newtonian fluids, were tested using the microfluidic viscometer and found to generate data that favorably compared to that obtained using conventional rheometer. A Non-Newtonian fluid polyethylene oxide (PEO) fluid was also tested at a range of shear rates between 200-2000/s, and similarly found to compare favorably a conventional rheometer.

Two exemplary cartridge designs were constructed and tested, as described below. Ten to 30 microliters (ul) of sample fluid were used to generate and analyze the data represented herein. Variable pressures in a range of range of 2000-20,000 Pa were applied to each sample fluid as indicated. Tests were run on channels that very closely resemble Cartridge 1 and Cartridge 2, however the dimensions were not precisely as described for each cartridge. All experiments were carried out at 25°C.

## Example 1

### Cartridge 1

In one cartridge iteration ("Cartridge 1", illustrated in **FIG. 2A**), a first channel section (1), also called a "small section", was in fluid communication with an inlet at one end and a second channel section (2), also called a large section, at its other end. This cartridge was tested using a system as shown in **FIG. 16A** (called NeoVisc in this Example). In this embodiments, the first channel section had a height of about 30 um (i.e., 27-33 um), a width of about 500 um (i.e., 494-501 um), and a length of about 1cm (i.e., 0.97 cm); the h/w aspect ratio of this exemplary microfluidic circuit was 0.06. The second channel section had a height and width of about 1000 um (i.e., height: 910-960 um and width: 980-1100 um), and a length of about 3cm (i.e., 2.7 cm). The inlet and outlet holes were both 5mm in diameter. Between 10 and 30uL of fluid was loaded into the cylindrical inlet of the cartridge. In this illustrative embodiment, the fluid experiences capillary effects due to the surface tension of the fluid-air interface in the large channel.

For the glycerol comparison using Cartridge 1 (**FIG. 17A**), each experimental data point comprises an average of three runs using the NeoVisc and was compared against viscosity data collected from a commercially available rheometer instrument (DV2T by Ametek Brookfield). For the PEO comparison **(FIG. 17B),** data points were collected at eight different shear rates and similarly were compared against rheometer data. The rheometer data is limited because the instrument requires additional spindles to cover a wider shear rate range. For the 30% glycerol plot, a single solution of 30 weight % glycerol was run at three different driving pressures, and the distance traveled over time was measured to confirm linearity. Finally, in the plot for K vs. Q, the geometric factor for one channel is back calculated from experimental data and plotted against the flow rate. Multiple glycerol solutions were tested in the same channel at several driving pressures, and in each case the flow rate and K value were determined. The plot shows that the K value (calculated as described above) for the channel remains the same across multiple fluids and flow rates, as expected.

**Table 1 (data presented in FIG. 17A)**

| Cartridge 1 (glycerol) | | | | |
|---|---|---|---|---|
| **Glycerol wt %** | **Pressure (Pa)** | **NeoVisc Viscosity** | **NeoVisc Standard Deviation** | **Rheometer Viscosity** |
| 0 | 7120, 5070, 2670 | 0.0008958 | 0.00003057 | 0.000911 |
| 10 | 5600 (x2)m 3200 | 0.001303 | 0.00004309 | 0.00125 |
| 20 | 4660 (x2), 2700 | 0.001726 | 0.00004104 | 0.00163 |
| 30 | 7120, 5100, 2670 | 0.002184 | 0.00009717 | 0.00232 |

**Table 2** *(data presented in FIG. 17B)*

| Cartridge 1 (PEO) | | | |
|---|---|---|---|
| **Shear Rate** | **Pressure (Pa)** | **NeoVisc Viscosity** | **Rheometer Viscosity** |
| 80 | | | 0.06837 |
| 100 | | | 0.06474 |
| 120 | | | 0.0617 |
| 140 | | | 0.05873 |
| 148.4 | 6330 | 0.06126 | |
| 160 | | | 0.05651 |
| 180 | | | 0.05395 |
| 199.4 | 7120 | 0.05064 | |
| 200 | | | 0.05181 |
| 204.6 | 7870 | 0.05571 | |
| 214.3 | 8360 | 0.05589 | |
| 220 | | | 0.05006 |
| 240 | | | 0.0486 |
| 260 | | | 0.04708 |
| 280 | | | 0.04591 |
| 300 | | | 0.04471 |
| 320 | | | 0.0436 |
| 340 | | | 0.04257 |
| 342.04 | 8363 | 0.04098 | |
| 360 | | | 0.0417 |
| 380 | | | 0.04083 |
| 400 | | | 0.04004 |
| 404.02 | 8950 | 0.03682 | |
| 524.45 | 11900 | 0.03249 | |
| 813.93 | 14900 | 0.02618 | |

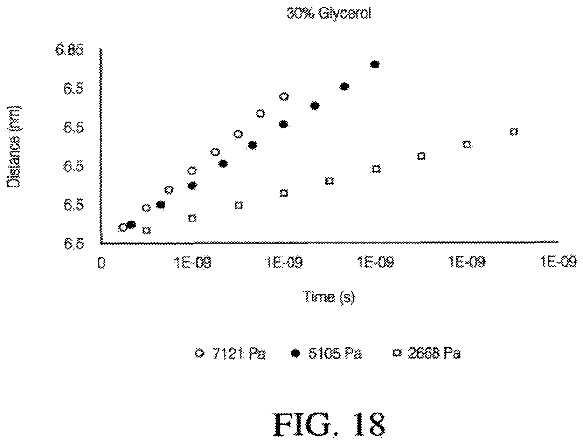

**Table 2 (data presented in FIG. 18)**

| Cartridge 1 (30% glycerol) | | | |
|---|---|---|---|
| **Time** | **Distance 7121 Pa** | **Distance 5105 Pa** | **Distance 2668 Pa** |
| 5 | 2.135523135 | | |
| 6.633333 | | 2.399136654 | |
| 9.966667 | | | 1.60454565 |
| 10 | 4.495937644 | | |
| 13.3 | | 4.91482506 | |
| 15 | 6.755560501 | | |
| 19.96667 | | 7.290591052 | |
| 19.96667 | | | 3.106558852 |
| 20 | 9.076918245 | | |

(continued)

| Cartridge 1 (30% glycerol) | | | |
|---|---|---|---|
| Time | Distance 7121 Pa | Distance 5105 Pa | Distance 2668 Pa |
| 25 | 11.42948264 | | |
| 26.63333 | | 9.902576636 | |
| 29.96667 | | | 4.7085161 |
| 30 | 13.84586559 | | |
| 33.3 | | 12.47601319 | |
| 35 | 16.29234066 | | |
| 39.96667 | | 14.92963113 | |
| 39.96667 | | | 6.229387666 |
| 40 | 18.69045512 | | |
| 46.63333 | | 17.46381503 | |
| 49.96667 | | | 7.8123809 |
| 53.3 | | 20.10108114 | |
| 59.96667 | | 22.71181024 | |
| 59.96667 | | | 9.351371286 |
| 69.96667 | | | 10.89543283 |
| 79.96667 | | | 12.41107476 |
| 89.96667 | | | 13.98387286 |

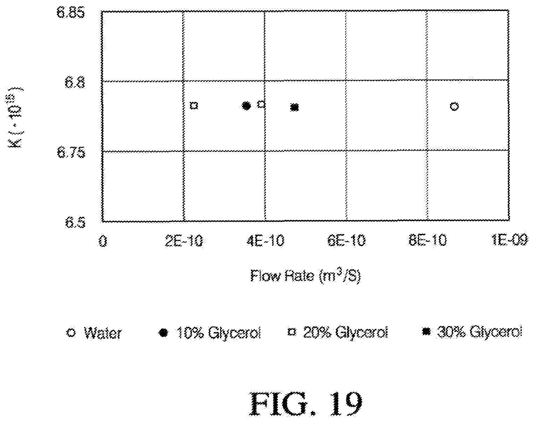

**Table 3 (data presented in FIG. 19)**

| Cartridge 1 (glycerol) | | | |
|---|---|---|---|
| Solution | Pressure (Pa) | Flow Rate | K |
| Water | 5070 | 8.64965E-10 | 6.78E+15 |
| 10% Glycerol | 3220 | 3.56075E-10 | 6.78E+15 |
| 20% Glycerol | 2700 | 2.26958E-10 | 6.78E+15 |
| 20% Glycerol | 4660 | 3.92629E-10 | 6.78E+15 |
| 30% Glycerol | 7120 | 4.70895E-10 | 6.78E+15 |

## Example 2

### Cartridge 2

In another cartridge iteration (Cartridge 2; illustrated in **FIG. 2B**), the microfluidic channels included three sections: a first channel section **(1),** also called a small section" providing the majority of the resistance encountered by the fluid as it moved through the microfluidic circuit positioned between two larger channels, a first large channel section **(2B-1),** also called a first large section, and a third channel section **(2B-2),** sometimes called a second large channel section, sharing equal geometries and producing less resistance to the fluid than the first channel section. This cartridge was tested using a system as shown in **FIG. 16A** (called NeoVisc in this Example). In each of the microfluidic circuits tested here, the first channel section (1) had a height of about 30 um (i.e., 30-32 um), a width of about 500 um (i.e., 498-504 um), and a length of about 1 cm (i.e., 0.99 cm); the h/w aspect ratio of this exemplary microfluidic circuit was 0.06. And the two larger channel sections (2B-1 and 2B-2) had heights and widths of about 1000 um (i.e., first channel section: 910-980; second and third channel sections: 990-1100 um), and length of about 3 cm. The inlet and outlet holes were 1.5 mm in diameter. Between 10 and 30 uL of fluid were loaded into the inlet and the camera captured the movement of fluid through the third channel section (i.e., 2B-2 in **FIG. 2B**). The fact that the two larger channels have equal geometries removes any capillary pressure effects, as the fluid-air interfaces present in both channels results in equal and opposite capillary pressures that negate each other.

For the glycerol comparison using Cartridge 2, each experimental data point comprises an average of at least six runs and is compared against viscosity data collected from a commercially available rheometer instrument (DV2T by Ametek Brookfield). The PEO comparison data was collected at eight different shear rates and similarly compared against rheometer data. The rheometer data is limited because the instrument requires additional spindles to cover a wider shear rate range.

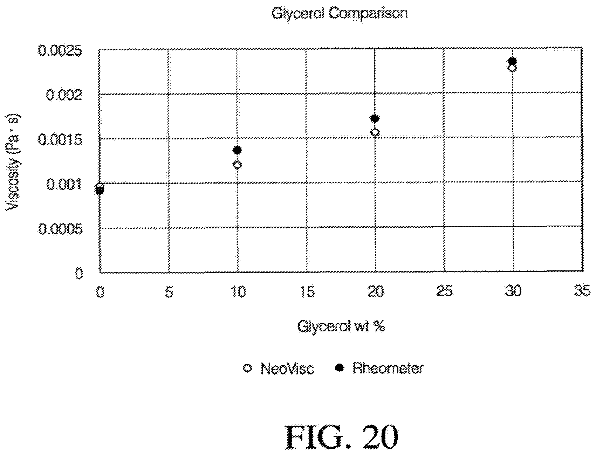

**Table 4 (data presented in FIG. 20)**

| Cartridge 2 | | | | |
|---|---|---|---|---|
| Glycerol wt % | Pressure (Pa) | NeoVisc Viscosity | NeoVisc Standard Deviation | Rheometer Viscosity |
| 0 | 4620 (x6) | 0.0009475 | 0.00002557 | 0.000911 |
| 10 | 4900 (x3), 4880 (x2), | 0.001181 | 0.00003549 | 0.00136 |
| | 4860 (x3), 4730 (x3) | | | |
| 20 | 5130 (x2), 5020, 4820 (x3) | 0.001541 | 0.00004921 | 0.00171 |
| 30 | 5700 (x2), 5670, 5650 (x2) | 0.002249 | 0.00005108 | 0.00236 |

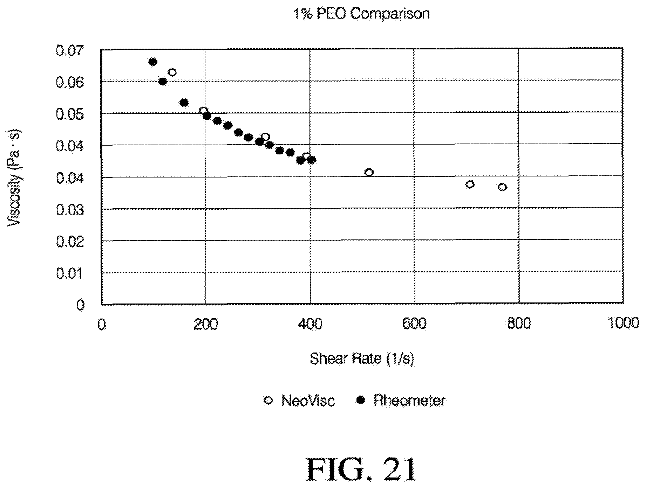

**Table 5 (data presented in FIG. 21)**

| Cartridge 2 | | | |
|---|---|---|---|
| Shear Rate | Pressure (Pa) | NeoVisc Viscosity | Rheometer Viscosity |
| 100 | | | 0.07572 |
| 120 | | | 0.06992 |
| 136.47 | 6270 | 0.07194 | |
| 160 | | | 0.06302 |
| 195.522 | 7530 | 0.06013 | |
| 200 | | | 0.05888 |
| 220 | | | 0.0575 |
| 240 | | | 0.05597 |
| 260 | | | 0.05345 |
| 260.72 | 8900 | 0.05314 | |
| 280 | | | 0.05189 |
| 300 | | | 0.05073 |
| 312.18 | 10240 | 0.05186 | |
| 320 | | | 0.04947 |
| 340 | | | 0.04782 |
| 360 | | | 0.04744 |
| 380 | | | 0.04524 |
| 393.3 | 11540 | 0.04594 | |
| 400 | | | 0.04525 |
| 510.366 | 13200 | 0.04085 | |
| 705.466 | 16650 | 0.03716 | |
| 766.9 | 17560 | 0.03617 | |

A comparison to conventional rheometry was also performed using a fluid comprising bovine serum albumin (BSA) using Cartridge 2. Each experimental data point comprises an average of at least six runs and is compared against viscosity data collected from a commercially available rheometer instrument (DV2T by Ametek Brookfield). The results are shown below and confirm that the microfluidic viscometer can be used for fluids comprising proteins.

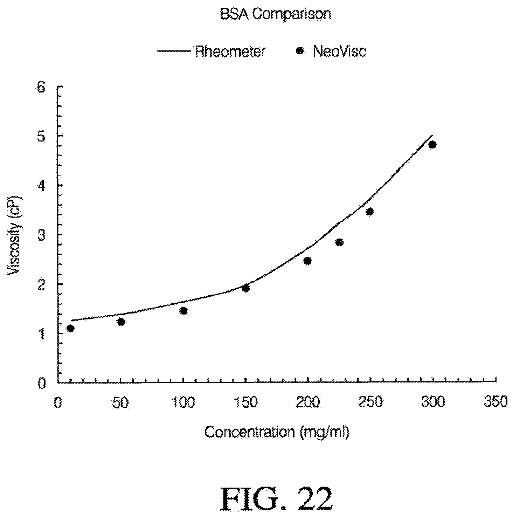

Table 6 (data presented in FIG. 22)

| Concentration (mg/mL) | Cartridge 2 | Rheometer | Pressure (Pa) |
|---|---|---|---|
| 10 | 0.001085 | 0.00125 | 7130 |
| 50 | 0.00123 | 0.00138 | 7130 |
| 100 | 0.001435 | 0.00162 | 7130 |
| 150 | 0.001905 | 0.00198 | 7230 |
| 200 | 0.002485 | 0.00269 | 7230 |
| 225 | 0.00281 | 0.0037_. | 7230 |
| 250 | 0.003375 | 0.00369 | 7230 |
| 300 | 0.004775 | 0.00498 | 7230 |

A comparison to conventional rheometry was also performed using a fluid comprising monoclonal antibodies (mAb) using Cartridge 2. Each experimental data point comprises an average of at least six runs and is compared against viscosity data collected from a commercially available rheometer instrument (DV2T by Ametek Brookfield). The results are shown below and further confirm that the microfluidic viscometer can be used for fluids comprising proteins.

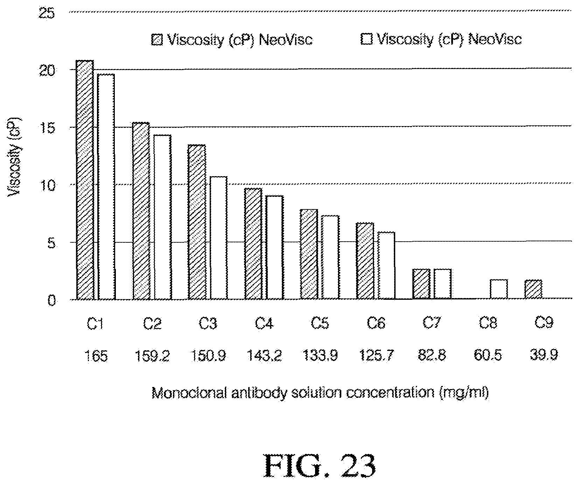

Table 7 (data presented in FIG. 23)

| Concentration (mg/mL) | Pressure (Pa) | Cartridge 2 Viscosity (cP) | Rheosense Viscosity (cP) |
|---|---|---|---|
| 165 | 12100 | 20.8 | 19.6 |
| 159.2 | 9600 | 15.5 | 14.5 |
| 150.9 | 9500 | 13.5 | 10.8 |
| 143.2 | 6900 | 9.8 | 9.2 |
| 133.9 | 6800 | 7.9 | 7.4 |
| 125.7 | 6700 | 6.7 | 6 |
| 82.8 | 6900 | 2.8 | 2.8 |
| 60.5 | 6900 | | 1.8 |
| 39.9 | 6900 | 1.7 | |

The present study demonstrated the ability of the microfluidic viscometers disclosed herein to measure the viscosity of Newtonian and Non-Newtonian fluids over a wide range of shear rates, and concentrations. Furthermore, the microfluidic viscometers disclosed herein are shown to minimize fluid sample volume down to 10μL, allows for easy multiplexing capabilities, and generates highly accurate results.

Those skilled in the art can devise many modifications and other embodiments within the scope and spirit of the present disclosure. Indeed, variations in the materials, methods, drawings, experiments, examples, and embodiments described may be made by skilled artisans without changing the fundamental aspects of the present disclosure. Any of the disclosed embodiments can be used in combination with any other disclosed embodiment.

In some instances, some concepts have been described with reference to specific embodiments. However, one of ordinary skill in the art appreciates that various modifications and changes can be made without departing from the scope of the invention as set forth in the claims below. Accordingly, the specification and figures are to be regarded in an illustrative rather than a restrictive sense, and all such modifications are intended to be included within the scope of the aspects and embodiments herein.

**Embodiments**

Various embodiment of the invention are defined in the clauses below:

1. A microfluidic viscometer assembly, the assembly comprising:

a) a microfluidic cartridge comprising at least two microfluidic circuits, each microfluidic circuit comprising:

i) an inlet;

ii) at least one microfluidic channel comprising:

a first channel section having a first diameter and an end in direct fluidic communication with the inlet, and

a second channel section having an optically clear channel subsection, or being completely optically clear, and having a second diameter greater than the first diameter, wherein the second section is in direct fluidic communication with the first section at an end opposite the inlet, and

iii) an outlet in fluid communication with the second section at an end opposite the first channel section,

wherein the first channel section provides a resistance to a fluid traversing said microfluidic channel that is at least 80% and less than 100% of a combined resistance of the first and second channel sections, and/or of the microfluidic circuit;

b) an image recording system optically connected to the optically clear channel section of the at least two microfluidic circuits; and

c) a pressure control unit, configured to deliver fluid into each of the at least two microfluidic circuits.

2. A microfluidic viscometer assembly, the assembly comprising:

a) a microfluidic cartridge comprising at least two microfluidic circuits, each microfluidic circuit comprising:

i. an inlet;
ii. an outlet;
iii. at least one microfluidic channel comprising at least a first, second and third channel section, wherein:

the first channel section is positioned between the second and third channel sections;

the second channel section at opposite ends is in direct fluidic communication with the first channel section and the outlet, and includes an optically clear channel subsection, or is completely optically clear;

the third channel section at opposite ends is in direct fluidic communication with the first channel section and the inlet; and

the first channel section provides a resistance that is at least 80% and less than 100% of the combined resistance encountered by a fluid traversing the first and second channel sections, and/or of the microfluidic circuit;

b) an image recording system optically connected to the optically clear channel subsection of each of the at least two microfluidic circuits; and

c) a pressure control unit configured to deliver fluid into each of the at least two microfluidic circuits.

3. The microfluidic viscometer assembly of clause 1 or 2, wherein the pressure control unit is programmable to deliver fluid into each of the microfluidic circuits at a constant pressure, wherein the pressure is the same in each microfluidic circuit.

4. The microfluidic viscometer assembly of any preceding clause, wherein the first and second channel sections are directly fluidly connected.

5. The microfluidic viscometer assembly of any preceding clause, wherein the first channel section has a height that is less than 0.1 its width.

6. The microfluidic viscometer assembly of any preceding clause, wherein the resistance of the first channel section is at least 90% and less than 100%, optionally wherein the resistance of the first section is at least 95% and less than 100% of the combined resistance of the first and second channel sections.

7. The microfluidic viscometer assembly of any preceding clause, further comprising a temperature control unit that controls the temperature of the microfluidic cartridge, optionally wherein the microfluidic cartridge contacts a conductive thermal plate having a temperature controlled by the temperature control unit.

8. The microfluidic viscometer assembly of clause 7, wherein the temperature control unit is connected to an automatic controller.

9. The microfluidic viscometer assembly of any one of clause 1-3, wherein the pressure control unit is connected to an automatic controller to deliver a constant pressure.

10. The microfluidic viscometer assembly of any preceding clause, further comprising a light source, optionally a diffuse light source, optically connected to the optically clear channel subsections.

11. The microfluidic viscometer assembly of any preceding clause, further comprising an image analysis function comprising instructions to determine velocity of a fluid through each of the microfluidic circuits and to use said velocity to determine a viscosity of the fluid, optionally wherein the image analysis function is a computer program stored on a memory of a computer that is not physically associated with the image recording system of the microfluidic viscometer assembly.

12. The microfluidic viscometer assembly of clause 11, wherein the image analysis function further comprises instructions to calculate shear stress, apparent shear rate, apparent viscosity, true shear rate, and/or true viscosity of said fluid of a fluid in each of the microfluidic circuits.

13. The microfluidic viscometer assembly of any preceding clause, wherein each microfluidic cartridge comprises 4 to 36 of said microfluidic circuits, and optionally comprises 10 or 12 microfluidic circuits.

14. The microfluidic viscometer assembly of clause 13, wherein a single image recording system is positioned above all the microfluidic circuits, or wherein a separate image recording system is positioned above each microfluidic circuit.

15. The microfluidic viscometer assembly of clause 7 or 8, wherein the temperature control unit is adapted for, configured for, and/or effective for maintaining the temperature of the microfluidic circuits in a microfluidic cartridge, or wherein two or more temperature control units separately maintain the temperature of at least two of said microfluidic circuits.

16. The microfluidic viscometer assembly of any preceding clause, wherein the pressure control unit controls the pressure applied to each of the microfluidic circuits, or wherein two or more pressure control units each separately control the pressure applied to at least two of said microfluidic circuits.

17. The microfluidic viscometer assembly of any one of the preceding clauses, wherein the microfluidic cartridge is a disposable microfluidic cartridge, removably connected to a microfluidic instrument comprising the image recording system and pressure control unit.

18. The microfluidic viscometer assembly of any one of the preceding clauses, wherein the microfluidic circuits of the microfluidic cartridge are formed in plastic.

19. The microfluidic viscometer assembly of any one of the preceding clauses, wherein said assembly does not comprise a glass capillary in fluid communication with the microfluidic circuits.

20. The microfluidic viscometer assembly of any one of the preceding clauses, wherein the walls of the first and second channel sections are non-deformable, and have the same composition.

21. The microfluidic viscometer assembly of any one of the preceding clauses, where the first and second channel sections form a straight fluidic flow path without a bend.

22. A method for determining the viscosity of a fluid using a microfluidic viscometer assembly of any preceding clause, said method comprising determining the velocity at which said fluid is moving through at least one of said at least one microchannel.

23. A method for determining the viscosity of a fluid using a microfluidic viscometer assembly of any preceding clause, said method comprising:

a) introducing a fluid into the microfluidic channel;
b) capturing at least two images of a fluid-air interface between said fluid and air within the optically clear channel section of at least one of said at least one microfluidic channel;
c) comparing the at least two images to determine the position of said fluid-air interface in each image; and,
d) determining the velocity at which said fluid is moving through said microchannel using the position of said fluid-air interface in each image;
e) optionally further calculating the shear stress, apparent shear rate, apparent viscosity, true shear rate, and/or true viscosity of said fluid.

24. A method for determining the viscosity of a fluid, said method comprising:

a) introducing the fluid into a first inlet to load the fluid into a first channel section of a first microfluidic circuit of a microfluidic cartridge comprising at least two microfluidic circuits, each microfluidic circuit comprising:

i) an inlet;
ii) at least one microfluidic channel comprising:

1) a first channel section having a first diameter and an end in direct fluidic communication with the inlet, and
2) a second channel section having an optically clear channel subsection, or being completely optically clear, and having a second diameter greater than the first diameter, wherein the second channel is in direct fluidic communication with the first channel section at an end opposite the inlet, and

iii) an outlet in fluid communication with the second channel section at an end opposite the first channel section,

wherein the first channel section provides a resistance to a fluid traversing said microfluidic channel that is at least 80% and less than 100% of a combined resistance of the first and second channel sections, and/or of the microfluidic circuits;
b) applying a constant pressure to said first channel section of the first microfluidic circuit to move the fluid from the first channel section to the second channel section;
c) determining the velocity at which said fluid is moving through said second channel section of the first microfluidic circuit; and
d) using the velocity to determine the viscosity of the fluid.

25. A method for determining the viscosity of a fluid, said method comprising:

a) introducing the fluid into a first inlet to load the fluid into a microfluidic channel of a first microfluidic circuit of a microfluidic cartridge comprising at least two microfluidic circuits, each microfluidic circuit comprising:

i) an inlet;
ii) an outlet;
iii) at least one microfluidic channel comprising at least a first, second and third channel section, wherein:

the first channel section is positioned between the second and third channel sections;

the second channel section at opposite ends is in direct fluidic communication with the first channel section and the outlet, and includes an optically clear channel subsection, or
is completely optically clear;
the third channel section at opposite ends is in direct fluidic communication with the first channel section and the inlet; and,
the first channel section provides a resistance that is at least 80% and less than 100% of the combined resistance encountered by a fluid traversing the first and second channel sections, or of the microfluidic circuit;

b) applying a constant pressure to said first channel section of the first microfluidic circuit to move the fluid from the first channel section to the second channel section;
c) determining the velocity at which said fluid is moving through said second channel section of the first microfluidic circuit; and
d) using the velocity to determine the viscosity of the fluid.

26. A method for determining the density of a fluid, said method comprising:

a) introducing the fluid into a first sample reservoir to load the fluid into a first inlet via a fluidic connection connecting the first sample reservoir to the first inlet, thereby loading the fluid into a first channel section of a first microfluidic circuit of a microfluidic cartridge comprising at least two microfluidic circuits, each microfluidic circuit comprising:

i) an inlet;
ii) at least one microfluidic channel comprising:

a first channel section having a first diameter and an end in direct fluidic communication with the inlet, and
a second channel section having an optically clear channel subsection, or being completely optically clear, and having a second diameter greater than the first diameter, wherein the second channel section is in direct fluidic communication with the first channel section at an end opposite the inlet, and

iii) an outlet in fluid communication with the second channel section at an end opposite the first channel section,

wherein the first channel section provides a resistance to a fluid traversing said microfluidic channel that is at least 80% and less than 100% of a combined resistance of the first and second channel sections, and/or of the microfluidic circuits;
b) continuing to load the fluid from the first sample reservoir into the first microfluidic circuit to move the fluid from said first channel section of the first microfluidic circuit to the second channel section;
c) applying a constant pressure to the second channel section of the first microfluidic circuit through the output;
d) determining the velocity at which said fluid is moving through said second channel section of the first microfluidic circuit; and
e) using the velocity to determine the density of the fluid.

27. A method for determining the density of a fluid, said method comprising:

a) introducing the fluid into a first sample reservoir to load the fluid into a first inlet via a fluidic connection connecting the first sample reservoir to the first inlet, thereby loading the fluid into a microfluidic channel of a first microfluidic circuit of a microfluidic cartridge comprising at least two microfluidic circuits, each microfluidic circuit comprising:

i) an inlet;
ii) an outlet;
iii) at least one microfluidic channel comprising at least a first, second and third channel sections, wherein:

the first channel section is positioned between the second and third channel sections;
the second channel section at opposite ends is in direct fluidic communication with the first channel section and the outlet, and includes an optically clear channel subsection, or
is completely optically clear;

the third channel section at opposite ends is in direct fluidic communication with the first channel section and the inlet; and,

the first channel section provides a resistance that is at least 80% and less than 100% of the combined resistance encountered by a fluid traversing the first and second channel sections, or of the microfluidic circuit;

b) continuing to load the fluid from the first sample reservoir into the first microfluidic circuit to move the fluid from said first channel section of the first microfluidic circuit to the second channel section;

c) applying a constant pressure to the second channel section of the first microfluidic circuit through the output;

d) determining the velocity at which said fluid is moving through said second channel section of the first microfluidic circuit; and

e) using the velocity to determine the density of the fluid.

28. A method for determining the viscoelasticity of a fluid, said method comprising:

a) introducing a fluid into a first inlet to load the fluid into a first channel section, second channel section, and third channel section of a first microfluidic channel to create a fluid-air interface in the second channel section, wherein the first microfluidic channel is part of a first microfluidic circuit of a microfluidic cartridge comprising at least two microfluidic circuits, each microfluidic circuit comprising:

i) an inlet;

ii) an outlet;

iii) at least one microfluidic channel comprising at least a first, second and third channel section, wherein:

1) the first channel section is positioned between the second and third channel sections;

2) the second channel section at opposite ends is in direct fluidic communication with the first channel section and the outlet, and includes an optically clear channel subsection, or is completely optically clear;

3) the third channel section at opposite ends is in direct fluidic communication with the first channel section and the inlet; and,

4) the first channel section provides a resistance that is at least 80% and less than 100% of the combined resistance encountered by a fluid traversing the first and second channel sections, or of the microfluidic circuit;

b) applying a positive pressure followed by a negative pressure to the first inlet to produce a pressure profile in the shape of a sine wave to the first microfluidic channel, thereby producing an oscillatory flow within the second channel section thereof;

c) tracking movement of the fluid within the second channel section of the first microfluidic channel to generate a response sine curve; and,

d) determining the viscoelasticity of the fluid by comparing the response sine curve to the pressure profile.

29. The method of any one of clauses 22-28, further comprising removably connecting the microfluidic cartridge to an instrument comprising:

A) a pressure control unit, wherein the pressure control unit applies the constant pressure to said first channel section; and

B) an image recording system, wherein the image recording system captures images that are used to determine the velocity at which said fluid is moving through said second channel section or to track movement of the fluid within the second channel section.

30. The method of any one of clauses 22-29, wherein the first channel section has a height that is less than 0.1 its width, optionally wherein the first channel section has a height that is 0.06 of its width. 30.

31. The method of any one of clauses 22-30, wherein said fluid is a Newtonian or non-Newtonian fluid.

32. The method of any one of clauses 22-31, wherein a glass capillary is not in fluid communication with a microfluidic circuit.

33. The method of any one of clauses 22-32, wherein the viscosity and/or density of multiple fluids are determined simultaneously.

34. The method of any one of clauses 22-323, wherein a control fluid is not loaded into a microfluidic channel during the method.

35. The method of any one of clauses 22-34, wherein said fluid is an aqueous fluid, an oil-based fluid is not loaded into a microfluidic channel, and/or an oil-aqueous fluid interface is not formed.

36. The method of any one of clauses 22-35, wherein the velocity of a fluid is determined by extracting two or more images recorded by the image recording system, and comparing a fluid-air interface in each of said images.

37. The method of clauses 22-36, wherein the microfluidic viscometer assembly further comprises a diffuse light source, and wherein the method further comprises illuminating the optically clear section to enhance detection of the fluid-air interface.

38. The method of any one of clause 22-37, further comprising after determining the viscosity, density, and/or viscoelasticity of the fluid, removing the microfluidic cartridge from the instrument.

39. The method of clause 38, wherein the method further comprises removably connecting another microfluidic cartridge to the instrument and repeating the method using another fluid.

40. The method of clause 39, wherein the method is first performed to determine the viscosity, density, and/or viscoelasticity of at least two different fluids loaded into different microfluidic circuits of the microfluidic cartridge, and then the method is performed on at least two additional fluids loaded into the other microfluidic cartridge.

41. The method of any one of clauses 22-40, wherein viscosity is determined using the velocity and the pressure and dimensions of the first, second, and optionallythird channel sections of the microfluidic channel.

42. The method of any one of clauses 22, 23, or 29 to 41, wherein a computer system comprising a user interface is digitally connected to the pressure control unit and/or the image recording system, such that inputs from the user interface control the pressure control unit and/or the image recording system.

43. The method of clause 26 or 27, wherein the velocity determination is used to determine when the fluid stops moving, and the density of the fluid is determined by measuring the pressure when the fluid stops moving.

44. The method of any one of clauses 26 to 43, wherein the method is used to determine a hydrodynamic radius of the fluid, an intrinsic viscosity of the fluid, an extensional viscosity of the fluid, a protein denaturation curve of the fluid, a protein conformation of the fluid, an injectability determination of the fluid, a molecular weight determination of the fluid, a shear rate of the fluid, a temperature sweep of the fluid, and/or a stability of the fluid.

45. A product comprising at least two microfluidic viscometer microfluidic cartridges, each microfluidic cartridge comprising at least one microfluidic circuit through which fluid can flow, each microfluidic circuit comprising:

an inlet through which said fluid can be loaded into the microfluidic circuit,

a microfluidic channel comprising a first channel section having a first diameter, and a second optically clear channel section having a second diameter greater than the first diameter, wherein the walls of the first channel and the second channel are comprised of the same or different non-deformable composition, and wherein the first channel section provides a resistance that is at least 80% and less than 100% of a combined resistance of the first and second channel sections; and,

an outlet through which said fluid can exit the channel.

46. A product comprising at least two microfluidic viscometer microfluidic cartridges, each microfluidic cartridge comprising:
at least one microfluidic circuit through which fluid can flow, each microfluidic circuit comprising:

an inlet through which said fluid can be loaded into the microfluidic circuit;

a microfluidic channel comprising a first channel section having a first diameter, a second channel section having a second diameter greater than the first diameter, a third optically clear channel section having a third diameter greater than the first diameter and optionally the same as the second diameter, wherein the first channel section provides a resistance that is at least 80% and less than 100% of a combined resistance of the first, second and third channel sections, and wherein the walls of the first, second and sections comprise the same or different non-deformable composition; and,

an outlet through which said fluid can exit the channel.

47. The product of clause 45 or 46, wherein the product further comprises a computer program stored on a computer memory, wherein the computer program comprises instructions for performing an image analysis function to determine velocity of a fluid through each of the microfluidic circuits and to use said velocity to determine a viscosity of the fluid, optionally wherein the image analysis function is a computer program stored on a memory that is not physically associated with the microfluidic viscometer.

48. The product of clause 47, wherein the computer program is accessible over the Internet or stored on a storage device.

49. The product of any one of clauses 44 to 48, wherein the product further comprises instructions for loading the microfluidic viscometer microfluidic cartridges into a microfluidic viscometer.

50. The product of any one of clauses 44 to 49, wherein the walls of the first channel and the second channel are comprised of the same non-deformable composition.

**Claims**

1. A microfluidic viscometer assembly comprising:

   a) a microfluidic cartridge comprising a microfluidic circuit, the microfluidic circuit comprising:

      i) an inlet;
      ii) a fluid;
      iii) at least one microfluidic channel comprising:

         a first channel section having a first diameter and an end in direct fluidic communication with the inlet, and a second channel section having an optically clear channel section, wherein the second section is in direct fluidic communication with the first section at an end opposite the inlet; and

      iv) an outlet in fluid communication with the second section at an end opposite the first channel section,

      wherein the first diameter of the first channel section is less than the second diameter of the second channel section; and
      b) an image recording system optically connected to the optically clear channel section of the microfluidic circuit and configured to image a fluid-air interface between said fluid and air within the microfluidic circuit.

2. The microfluidic viscometer assembly of claim 1, wherein the assembly comprises a third channel section, and wherein the third channel section at opposite ends is in direct fluidic communication with the first channel section and the inlet.

3. The microfluidic viscometer assembly of claim 1, further comprising a pressure control unit configured to deliver fluid into the microfluidic circuit.

4. The microfluidic viscometer assembly of claim 3, wherein the pressure control unit is programmable to deliver fluid into the microfluidic circuit at a constant pressure, wherein the pressure control unit is optionally connected to an automatic controller to deliver the constant pressure.

5. The microfluidic viscometer assembly of claim 1, wherein the first and second channel sections are directly fluidly connected.

6. The microfluidic viscometer assembly of claim 1, wherein the first channel section has a height that is less than 0.1 its width.

7. The microfluidic viscometer assembly of claim 1, further comprising a temperature control unit that controls the temperature of the microfluidic cartridge, optionally wherein the microfluidic cartridge contacts a conductive thermal plate having a temperature controlled by the temperature control unit.

8. The microfluidic viscometer assembly of claim 7, wherein the temperature control unit is connected to an automatic controller.

9. The microfluidic viscometer assembly of claim 1, further comprising a light source, optionally a diffuse light source, optically connected to the optically clear channel section.

10. The microfluidic viscometer assembly of claim 1, further comprising an image analysis function comprising instructions to determine velocity of the fluid through the microfluidic circuit and to use said velocity to determine a viscosity of the fluid, optionally wherein the image analysis function is a computer program stored on a memory of a computer that is not physically associated with the image recording system of the microfluidic viscometer assembly.

11. The microfluidic viscometer assembly of claim 10, wherein the image analysis function further comprises instructions to calculate shear stress, apparent shear rate, apparent viscosity, true shear rate, and/or true viscosity of said fluid of a fluid in the microfluidic circuit.

12. The microfluidic viscometer assembly of claim 1, wherein the microfluidic cartridge comprises 10 to 12 microfluidic circuits.

13. A method for determining the viscosity of a fluid using the microfluidic viscometer assembly of any one of claims 1-12, said method comprising determining the velocity at which said fluid is moving through the microfluidic channel.

14. The method of claim 13, further comprising:

a) introducing the fluid into the microfluidic channel;
b) capturing at least two images of the fluid-air interface between said fluid and air within the optically clear channel section of at least one of the microfluidic channel;
c) comparing the at least two images to determine the position of said fluid-air interface in each image;
d) using the position of said fluid-air interface in each image to determine the velocity at which said fluid is moving through said microfluidic channel; and
e) optionally further calculating the shear stress, apparent shear rate, apparent viscosity, true shear rate, and/or true viscosity of said fluid.

15. The method of claim 14, further comprising applying a constant pressure to said first channel section of the microfluidic circuit to move the fluid from the first channel section to the second channel section.

**FIG. 1**

FIG. 2A

FIG. 2B

FIG. 3A

FIG. 3B

FIG. 3C

FIG. 3D

FIG. 4

EP 4 524 546 A2

FIG. 5

FIG. 6

FIG. 7A

FIG. 7B

FIG. 8A

FIG. 8B

FIG. 9

EP 4 524 546 A2

FIG. 10

FIG. 11

FIG. 12

FIG. 13

FIG. 14

FIG. 15A

FIG. 15B

NeoVISC

Multiplexed Cartridge

FIG. 16A

FIG. 16B

Glycerol Comparison

FIG. 17A

FIG. 17B

FIG. 18

FIG. 19

FIG. 20

1% PEO Comparison

FIG. 21

EP 4 524 546 A2

FIG. 22

EP 4 524 546 A2

FIG. 23

FIG. 24

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 62755320

**Non-patent literature cited in the description**

- **ARMSTRONG JK** ; **WENBY RB** ; **MEISELMAN HJ** ; **FISHER TC**. The hydrodynamic radii of macromolecules and their effect on red blood cell aggregation. *Biophys J.*, 2004, vol. 87 (6), 4259-70

- **SOUSA, ISABEL** ; **MITCHELL, JOHN** ; **HILL, SANDRA** ; **HARDING, STEPHEN**. Intrinsic viscosity and Mark-Houwink parameter of lupin proteins in aqueous solutions. *Les Cahiers de rheologie*, 1995, vol. 14, 139-148
- **GUPTA**. *Biomicrofluids*, 2016, vol. 10, 043402